(19) Europäisches Patentamt
European Patent Office
Office européen des brevets

(11) **EP 3 058 421 B1**

(12) **EUROPÄISCHE PATENTSCHRIFT**


(45) Veröffentlichungstag und Bekanntmachung des Hinweises auf die Patenterteilung:
**03.04.2019 Patentblatt 2019/14**

(21) Anmeldenummer: **14776817.0**

(22) Anmeldetag: **22.09.2014**

(51) Int Cl.:
***C09K 19/58*** *(2006.01)* ***G02F 1/1337*** *(2006.01)*
***C09K 19/60*** *(2006.01)* ***C09K 19/02*** *(2006.01)*
***G02F 1/1335*** *(2006.01)* ***G02F 1/1347*** *(2006.01)*
***G02F 1/139*** *(2006.01)* ***E06B 9/24*** *(2006.01)*
***G02F 1/137*** *(2006.01)* ***G02F 1/1333*** *(2006.01)*

(86) Internationale Anmeldenummer:
**PCT/EP2014/002564**

(87) Internationale Veröffentlichungsnummer:
**WO 2015/055274 (23.04.2015 Gazette 2015/16)**


(54) **VORRICHTUNG ZUR REGULIERUNG DES LICHTEINTRITTS**

DEVICE FOR REGULATING ENTRY OF LIGHT

DISPOSITIF DE RÉGULATION DE L'ENTRÉE DE LUMIÈRE


(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.10.2013 EP 13004971**

(43) Veröffentlichungstag der Anmeldung:
**24.08.2016 Patentblatt 2016/34**



(73) Patentinhaber: **Merck Patent GmbH**
**64293 Darmstadt (DE)**

(72) Erfinder:
- **JUNGE, Michael**
  **64319 Pfungstadt (DE)**
- **BEYER, Andreas**
  **63452 Hanau (DE)**
- **PATWAL, Ursula**
  **64353 Reinheim (DE)**



(56) Entgegenhaltungen:
**WO-A1-2009/141295** **WO-A1-2013/020629**
**WO-A1-2013/060406** **WO-A1-2014/090367**
**WO-A1-2014/090373** **WO-A2-2014/135240**
**JP-A- H0 566 425**



Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).


EP 3 058 421 B1

Printed by Jouve, 75001 PARIS (FR)

## Beschreibung

Die vorliegende Erfindung betrifft eine Vorrichtung zur Regulierung des Lichteintritts in einen Raum, welche eine schaltbare Schicht enthaltend ein flüssigkristallines Medium und eine dichroitische Verbindung umfasst, wobei das flüssigkristalline Medium in mindestens einem Schaltzustand der Vorrichtung in einem verdrillt nematischen Zustand vorliegt.

Unter dem Begriff Licht wird im Rahmen der vorliegenden Erfindung insbesondere elektromagnetische Strahlung im UV-A-, VIS-, sowie NIR-Bereich verstanden. Insbesondere wird darunter Licht einer Wellenlänge verstanden, welche von den üblicherweise in Fenstern verwendeten Materialien (z. B. Glas) nicht oder nur in einem vernachlässigbaren Umfang absorbiert wird. Gemäß den üblicherweise verwendeten Definitionen wird unter dem UV-A-Bereich eine Wellenlänge von 320 bis 380 nm verstanden, unter dem VIS-Bereich eine Wellenlänge von 380 nm bis 780 nm verstanden und unter dem NIR-Bereich eine Wellenlänge von 780 nm bis 2000 nm verstanden.

Unter dem Begriff flüssigkristallines Medium wird im Rahmen der vorliegenden Erfindung ein Material verstanden, das unter bestimmten Bedingungen flüssigkristalline Eigenschaften aufweist. Typischerweise enthält das flüssigkristalline Medium gemäß der Erfindung mindestens eine Verbindung, deren Moleküle eine langgestreckte Form aufweisen, d.h. in einer Raumrichtung deutlich länger (Längsachse) sind als in den anderen beiden Raumrichtungen.

Unter einer dichroitischen Verbindung wird im Rahmen der vorliegenden Erfindung eine lichtabsorbierende Verbindung verstanden, bei der die Absorptionseigenschaften von der Orientierung der Verbindung relativ zur Polarisationsrichtung des Lichts abhängig sind. Typischerweise weist eine dichroitische Verbindung gemäß der vorliegenden Erfindung eine langgestreckte Form auf, d.h. die Verbindung ist in einer Raumrichtung deutlich länger (Längsachse) als in den anderen beiden Raumrichtungen.

Unter einem verdrillt nematischen Zustand (twisted nematic state) wird ein Zustand verstanden, in dem die Orientierungsachsen der Moleküle des flüssigkristallinen Mediums jeweils innerhalb einer Ebene, die parallel zur Ebene der schaltbaren Schicht liegt, parallel zueinander vorliegen, jedoch gegenüber den Orientierungsachsen der Moleküle benachbarter Ebenen um einen bestimmten Winkel gedreht sind. Die relative Drehung der Orientierungsachse in einer Ebene gegenüber der Orientierungsachse in einer anderen Ebene ist proportional zum Abstand der Ebenen zueinander auf einer Achse parallel zur schaltbaren Schicht, so dass die Orientierungsachsen eine Helix mit Helixachse senkrecht auf der Ebene der schaltbaren Schicht beschreiben. Fig. 2 der Abbildungen, die in folgenden Abschnitten näher erläutert wird, verdeutlicht den verdrillt nematischen Zustand.

Auf dem Gebiet der Vorrichtungen zur Regulierung des Lichteintritts in Räume (schaltbare Fenster, smart windows) sind in der vergangenen Zeit eine Reihe von unterschiedlichen technischen Lösungen vorgeschlagen worden.

Eine mögliche Lösung ist die Verwendung einer schaltbaren Schicht enthaltend ein flüssigkristallines Medium in unverdrillt nematischem Zustand in Mischung mit einer oder mehreren dichroitischen Verbindungen. Durch Anlegen einer Spannung kann bei diesen schaltbaren Schichten eine Veränderung der räumlichen Orientierung der Moleküle der dichroitischen Verbindung erzielt werden, welche eine Änderung der Transmission durch die schaltbare Schicht bewirkt. Eine entsprechende Vorrichtung ist beispielsweise in WO 2009/141295 beschrieben. Alternativ kann eine solche Transmissionsänderung auch ohne elektrische Spannung durch einen Temperatur-induzierten Übergang von einem isotropen Zustand des flüssigkristallinen Mediums zu einem flüssigkristallinen Zustand erzielt werden, wie beispielsweise in US 2010/0259698 beschrieben. WO 2013/060406 A1 beschreibt ein temperaturgesteuertes Schaltelement mit zwei Polarisatoren und einer Schaltschicht, welche ein flüssigkristallines Medium und ein Polymer enthält.

Das Dokument WO 2014/135240 A2, welches Stand der Technik gemäß Artikel 54(3) EPÜ darstellt, beschreibt eine Vorrichtung zur Regulierung des Lichtdurchtritts durch eine lichtdurchlässige Fläche, welche eine Schaltschicht umfasst, die ein flüssigkristallines Medium mit mindestens einem dichroitischen Farbstoff enthält, wobei der Lichttransmissionsgrad und der Anisotropiegrad in bestimmter Weise gewählt sind.

Es ist in diesem Zusammenhang von Interesse, Vorrichtungen zur Regulierung des Lichteintritts in einen Raum bereitzustellen, welche eine möglichst große Energie-Regulationsfähigkeit aufweisen, d.h. beim Schalten einen möglichst großen Unterschied in ihrer Lichtdurchlässigkeit aufweisen. Der Unterschied wird auch als Schalthub oder Hub bezeichnet. Durch einen möglichst großen Schalthub können die Vorrichtungen den Energie-Eintrag in einen Raum und damit beispielsweise die Temperatur dieses Raums effektiv regulieren. Weiterhin ist es von Interesse, dass die Vorrichtungen möglichst einfach konstruiert sind, insbesondere möglichst wenige Schichten aufweisen. Nochmals weiterhin sollten die Vorrichtungen eine möglichst geringe elektrische Spannung für den Schaltvorgang benötigen, also energieeffizient arbeiten. Nochmals weiterhin sollten die Vorrichtungen möglichst geringe Mengen an flüssigkristallinem Medium enthalten.

Im Rahmen der vorliegenden Erfindung wurden nun gefunden, dass die oben genannten technischen Aufgaben durch Bereitstellung einer neuartig aufgebauten Vorrichtung zur Regulierung des Lichteintritts, die ein verdrillt nematisches flüssigkristallines Medium aufweist, gelöst werden können. Unerwarteterweise weist eine solche Vorrichtung einen deutlich größeren Schalthub auf, verglichen mit Vorrichtungen mit unverdrillt nematischem flüssigkristallinen Medium in der schaltbaren Schicht.

Gegenstand der Erfindung ist daher die Vorrichtung zur Regulierung des Lichteintritts in einen Raum gemäß Anspruch 1, umfassend eine schaltbare Schicht S enthaltend ein flüssigkristallines Medium, das mindestens eine dichroitische Verbindung enthält,
wobei für die Dicke d der Schicht S und die optische Anisotropie $\Delta n$ des flüssigkristallinen Mediums der Schicht S gilt:

$$d < 0{,}9\ \mu m / \Delta n$$

und

$$d > 0{,}2\ \mu m / \Delta n$$

und wobei die Moleküle des flüssigkristallinen Mediums der Schicht S im Schaltzustand der Vorrichtung ohne angelegte elektrische Spannung oder im Schaltzustand der Vorrichtung mit angelegter elektrischer Spannung in einem verdrillt nematischen Zustand vorliegen.

Die optische Anisotropie wird dabei bei 20°C und 589 nm bestimmt wie in "Merck Liquid Crystals, Physical Properties of Liquid Crystals", Status Nov. 1997, Merck KGaA, Deutschland angegeben.

Bevorzugt umfasst die Vorrichtung eine oder mehrere, besonders bevorzugt zwei Orientierungsschichten, welche direkt angrenzend an die schaltbare Schicht S angeordnet sind. Es ist erfindungsgemäß bevorzugt, dass genau eine Orientierungsschicht, bezeichnet als O1, an die eine Seite der schaltbaren Schicht S angrenzt, und genau eine andere Orientierungsschicht, bezeichnet als 02, an die gegenüberliegende Seite der schaltbaren Schicht S angrenzt.

Bevorzugt bewirken die Orientierungsschichten eine homogene Anordnung der Moleküle des flüssigkristallinen Mediums der Schicht S angrenzend an die Orientierungsschicht. Sie können gemäß einer alternativen Ausführungsform der Erfindung jedoch auch so gestaltet sein, dass sie eine senkrechte Anordnung der Moleküle des flüssigkristallinen Mediums der Schicht S angrenzend an die Orientierungsschicht bewirken.

Weiterhin bevorzugt bewirken die Orientierungsschichten eine Ausrichtung der Moleküle des flüssigkristallinen Mediums der Schicht S an der Grenzfläche zur jeweiligen Orientierungsschicht entlang der Reiberichtung der Orientierungsschicht. Es ist bevorzugt, dass die Orientierungsschichten O1 und O2 derart gestaltet sind, dass sie im angrenzenden Bereich der Schicht S jeweils unterschiedlich ausgerichtete Orientierungsachsen der Moleküle des flüssigkristallinen Mediums bewirken. Dies führt zu einer Verdrillung der Moleküle des flüssigkristallinen Mediums.

Es ist bevorzugt, dass die Reiberichtungen der Orientierungsschichten O1 und O2 einen Winkel von 30 bis 270° einschließen, besonders bevorzugt einen Winkel von 100° bis 260°, ganz besonders bevorzugt einen Winkel von 160 bis 255°, und am stärksten bevorzugt einen Winkel von 230 bis 250°.

Bevorzugt sind die Orientierungsschichten Polyimid-Schichten. Besonders bevorzugt weisen die Orientierungsschichten an ihrer Oberfläche angrenzend an die Schicht S geriebenes Polyimid auf. Auf bestimmte, dem Fachmann bekannte Art geriebenes Polyimid führt zu einer Vorzugsausrichtung der Verbindungen des flüssigkristallinen Mediums in Reiberichtung, wenn die Verbindungen planar zur Orientierungsschicht vorliegen. Weiterhin können Polymere, die durch einen Belichtungsvorgang mit polarisiertem Licht erhalten wurden, als Orientierungsschicht zum Erreichen einer Vorzugsrichtung der Verbindungen des flüssigkristallinen Mediums verwendet werden (photoalignment).

Für Orientierungsschichten, die eine senkrechte Anordnung der Moleküle des flüssigkristallinen Mediums bewirken sollen, sind dem Fachmann entsprechende Ausführungsformen bekannt.

Weiterhin ist es bevorzugt, dass die Moleküle des flüssigkristallinen Mediums bei der homogenen Ausrichtung im Zustand ohne angelegte Spannung nicht völlig planar auf der Orientierungsschicht vorliegen, sondern einen leichten Aufstellwinkel aufweisen (pretilt). Bevorzugt schließen die Orientierungsachsen der Moleküle des flüssigkristallinen Mediums der Schicht S bei homogener Ausrichtung im Zustand ohne angelegte Spannung einen Winkel von 1° bis 10° mit der Ebene der Orientierungsschicht O1 bzw. O2 ein, besonders bevorzugt einen Winkel von 2° bis 9°, und ganz besonders bevorzugt einen Winkel von 3° bis 8°. Dies kann durch geeignete Ausgestaltung der Orientierungsschicht erreicht werden. Verfahren hierzu sind dem Fachmann bekannt, beispielsweise durch geeignete Wahl der Curing-Zeiten und Curing-Temperaturen für kommerziell erhältlich Polyimid-Ausgangsstoffe nach empirischen Verfahren und/oder Herstellerangaben. Durch die Wahl eines Pretiltwinkels im bevorzugten Bereich kann ein besonders homogenes Erscheinungsbild der Vorrichtung in der Durchsicht erreicht werden, und optische Störungen werden vermieden.

Für den alternativen Fall der homeotropen Ausrichtung der Moleküle des flüssigkristallinen Mediums im Zustand ohne angelegte Spannung ist es bevorzugt, dass die Orientierungsachsen der Moleküle nicht völlig senkrecht auf der Ebene der Orientierungsschicht O1 bzw. O2 stehen, sondern mit dieser einen leicht von 90° abweichenden Winkel einschließen. Bevorzugt beträgt der Winkel, der in diesem Fall von den Orientierungsachsen mit der Ebene der Orientierungsschicht O1 bzw. O2 eingeschlossen wird 89° bis 80°, besonders bevorzugt 88° bis 81° und ganz besonders

bevorzugt 87° bis 82°.

Weiterhin bevorzugt ist in der erfindungsgemäßen Vorrichtung die Schicht S zwischen zwei Substratschichten angeordnet bzw. von diesen eingeschlossen. Die Substratschichten können beispielsweise aus Glas oder einem Polymer bestehen, insbesondere aus Glas, PET, PEN, PVB oder PMMA.

Die Vorrichtung gemäß der vorliegenden Erfindung umfasst keinen Polarisator.

Es ist bevorzugt, dass die erfindungsgemäße Vorrichtung genau eine schaltbare Schicht aufweist.

Bevorzugt hat die Schicht S eine Dicke von 2 bis 12 $\mu$m, besonders bevorzugt von 3 bis 10 $\mu$m und ganz besonders bevorzugt von 4 bis 8 $\mu$m. Dies bewirkt einen besonders hohen Hub der Lichttransmission.

Bevorzugt weist die Schicht S einen Lichttransmissionsgrad des Hellzustands $\tau_{v\ hell}$, berechnet nach der Europäischen Norm EN410, Gleichung (1), von mindestens 30%, bevorzugt mindestens 35%, besonders bevorzugt mindestens 40% und ganz besonders bevorzugt mindestens 50% auf. Der Lichttransmissionsgrad des Hellzustands $\tau_{v\ hell}$ der schaltbaren Schicht wird in Prozent angegeben. Er wird berechnet aus dem Verhältnis des Lichttransmissionsgrads der schaltbaren Schicht im Hellzustand der Vorrichtung bezogen auf eine Vorrichtung mit schaltbarer Schicht ohne Farbstoff als Referenz. Er wird nach der Europäischen Norm EN410, Gleichung (1) (Bestimmung der lichttechnischen und strahlungsphysikalischen Kenngrößen von Verglasungen) ermittelt aus den spektralen Transmissionsgraden unter Berücksichtigung der relativen spektralen Verteilung der Normlichtart und des spektralen Hellempfindlichkeitsgrads des Normalbeobachters.

Bevorzugt ist die Vorrichtung dadurch gekennzeichnet, dass die Schicht S mindestens zwei verschiedene dichroitische Verbindungen aufweist, bevorzugt genau 2, 3, 4, 5 oder 6 verschiedene dichroitische Verbindungen, besonders bevorzugt genau 2, 3 oder 4 verschiedene dichroitische Verbindungen.

Es ist weiterhin bevorzugt, dass mindestens eine der dichroitischen Verbindungen lumineszierend ist, bevorzugt fluoreszierend.

Unter Fluoreszenz wird dabei verstanden, dass eine Verbindung durch Absorption von Licht einer bestimmten Wellenlänge in einen elektronisch angeregten Zustand versetzt wird, wobei die Verbindung anschließend unter Emission von Licht in den Grundzustand übergeht. Bevorzugt hat das emittierte Licht eine längere Wellenlänge als das absorbierte Licht. Weiterhin bevorzugt ist der Übergang vom angeregten Zustand in den Grundzustand spin-erlaubt, erfolgt also ohne Änderung des Spins. Weiterhin bevorzugt ist die Lebensdauer des angeregten Zustands der fluoreszierenden Verbindung kürzer als $10^{-5}$ s, besonders bevorzugt kürzer als $10^{-6}$ s, ganz besonders bevorzugt zwischen $10^{-9}$ und $10^{-7}$ s.

Die Absorptionsspektren der dichroitischen Verbindungen im flüssigkristallinen Medium ergänzen sich bevorzugt derart, dass für das Auge der Eindruck von schwarzer Farbe der Vorrichtung entsteht. Besonders bevorzugt ist die Vorrichtung in allen ihren Schaltzuständen in der Durchsicht farblos, wobei ein grauer oder schwarzer Eindruck ebenfalls als farblos gilt.

Bevorzugt decken die zwei oder mehr dichroitischen Verbindungen des flüssigkristallinen Mediums einen großen Teil des sichtbaren Spektrums ab. Bevorzugt wird dies dadurch erreicht, dass mindestens eine dichroitische Verbindung rotes Licht absorbiert, mindestens eine grünes bis gelbes Licht absorbiert und mindestens eine blaues Licht absorbiert.

Wie genau eine Mischung von dichroitischen Verbindungen hergestellt werden kann, die für das Auge schwarz bzw. grau erscheint, ist dem Fachmann bekannt und beispielsweise in Manfred Richter, Einführung in die Farbmetrik, 2. Auflage, 1981, ISBN 3-11-008209-8, Verlag Walter de Gruyter & Co., beschrieben.

Weiterhin bevorzugt absorbieren die dichroitischen Verbindungen vorwiegend Licht im UV-VIS-NIR-Bereich, d. h. in einem Wellenlängenbereich von 320 bis 2000 nm. UV-Licht, VIS-Licht und NIR-Licht sind dabei wie oben definiert. Besonders bevorzugt weisen die dichroitischen Verbindungen Absorptionsmaxima auf, die im Bereich von 400 bis 1300 nm liegen.

Der Anteil aller dichroitischen Verbindungen zusammen im flüssigkristallinen Medium beträgt bevorzugt insgesamt 0.01 bis 10 Gew.-%, besonders bevorzugt 0.1 bis 7 Gew.-% und ganz besonders bevorzugt 0.2 bis 7 Gew.-%. Der Anteil einer einzelnen dichroitischen Verbindung beträgt bevorzugt 0.01 bis 10 Gew.-%, bevorzugt 0.05 bis 7 Gew.-% und ganz besonders bevorzugt 0.1 bis 7 Gew.-%.

Der genau bevorzugte Anteil der dichroitischen Verbindungen am flüssigkristallinen Medium ist abhängig von der Dicke der Schicht S. Es ist insbesondere bevorzugt, dass das Produkt aus Anteil der dichroitischen Verbindungen an der flüssigkristallinen Schicht und der Dicke der Schicht zwischen 8 und 40 Gew.-% * $\mu$m, besonders bevorzugt zwischen 10 und 35 Gew.-% * $\mu$m liegt.

Weiterhin bevorzugt sind die dichroitischen Verbindungen gewählt aus den in B. Bahadur, Liquid Crystals - Applications and Uses, Vol. 3, 1992, World Scientific Publishing, Abschnitt 11.2.1 angegebenen Verbindungsklassen und besonders bevorzugt aus den in der dort vorhandenen Tabelle aufgeführten expliziten Verbindungen.

Bevorzugt ist mindestens eine dichroitische Verbindung, besonders bevorzugt sind alle dichroitischen Verbindungen gewählt aus Azoverbindungen, Anthrachinonen, Methinverbindungen, Azomethinverbindungen, Merocyaninverbindungen, Naphthochinonen, Tetrazinen, Perylenen, Terrylenen, Quaterrylenen, höheren Rylenen, Squarainen, Benzothiadiazolen, Diketopyrrolopyrrolen und Pyrromethenen.

Anthrachinonfarbstoffe sind beispielsweise beschrieben in EP 34832, EP 44893, EP 48583, EP 54217, EP 56492, EP 59036, GB 2065158, GB 2065695, GB 2081736, GB 2082196, GB 2094822, GB 2094825, JP-OS 55-123673, DE 3017877, DE 3040102, DE 3115147, DE 3115762, DE 3150803 und DE 3201120, Naphthochinonfarbstoffe sind beispielsweise beschrieben in DE 3126108 und DE 3202761, Azofarbstoffe in EP 43904, DE 3123519, WO 82/2054, GB 2079770, JP-OS 56-57850, JP-OS 56-104984, US 4308161, US 4308162, US 4340973, T. Uchida, C. Shishido, H. Seki und M. Wada: Mol. Cryst. Lig. Cryst. 39, 39-52 (1977) und H. Seki, C. Shishido, S. Yasui und T. Uchida: Jpn. J. Appl. Phys. 21, 191-192 (1982), und Perylene in EP 60895, EP 68427 und WO 82/1191.

Ganz besonders bevorzugt sind Benzothiadiazol-Farbstoffe, wie beispielsweise in JP 2008/268762, JP 2003/104976, WO2004002970, X. Zhang et al., J. Mater. Chem. 2004, 14, 1901-1904, X. Zhang et al., J. Mater. Chem., 2006, 16, 736-740, und X. Li et al., Org. Lett. 2008, 10, 17, 3785-3787, und in der Anmeldung EP 13002711.3 offenbart. Weiterhin ganz besonders bevorzugt sind Rylen-Farbstoffe, wie beispielsweise in EP 2166040, US 2011/0042651, EP 68427, EP 47027, EP 60895, DE 3110960 und EP 698649 offenbart. Weiterhin ganz besonders bevorzugt sind Diketopyrrolopyrrole, wie beispielsweise in der Anmeldung EP 13005918.1 offenbart.

Gemäß einer bevorzugten Ausführungsform enthält das flüssigkristalline Medium ausschließlich dichroitische Verbindungen gewählt aus den Klassen der Benzothiadiazol-Farbstoffe, Azofarbstoffe, Diketopyrrolopyrrolfarbstoffe und Rylen-Farbstoffe.

Beispiele für bevorzugte dichroitische Verbindungen, die im flüssigkristallinen Medium enthalten sein können, sind in der folgenden Tabelle abgebildet.

| |
|---|
| 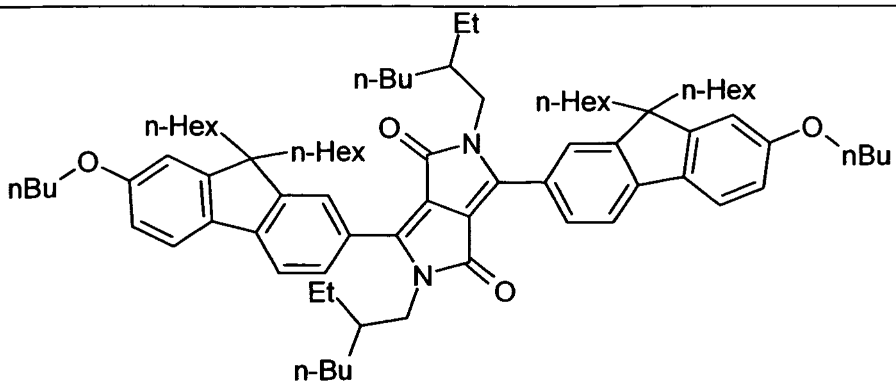 |
| |
| 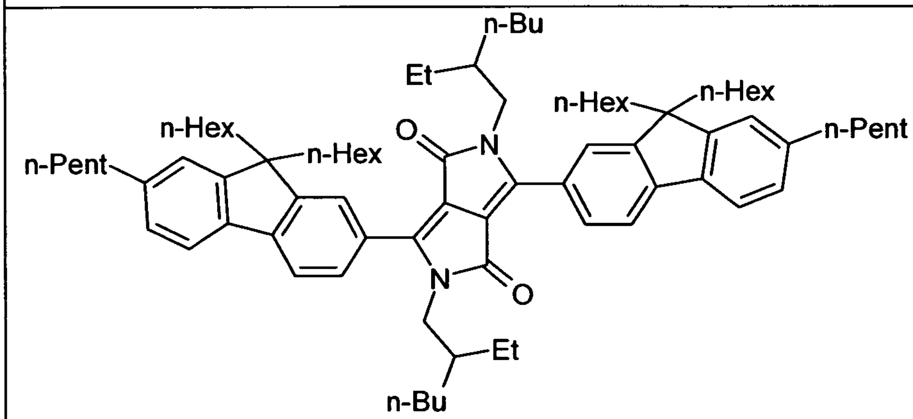 |
| |
| 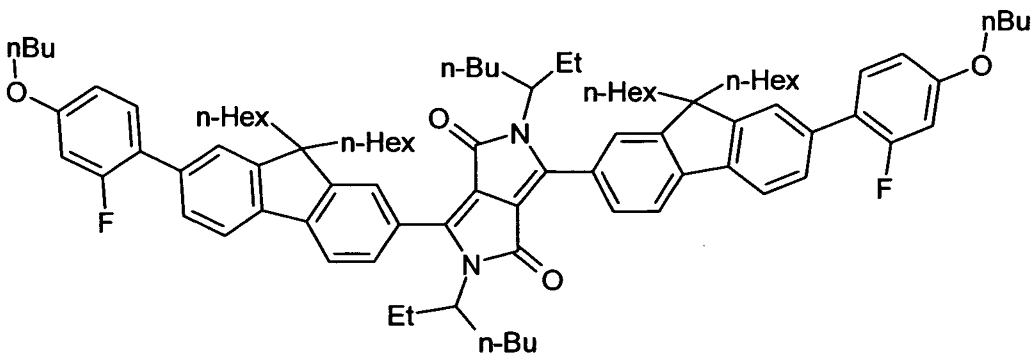 |
| |

| |
|---|
| 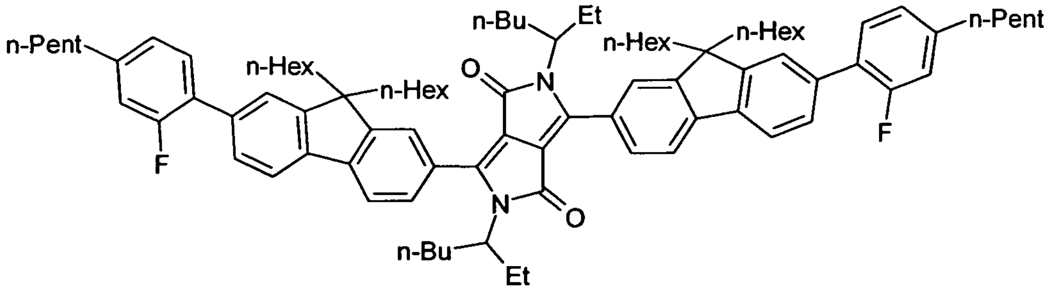 |
| |
| 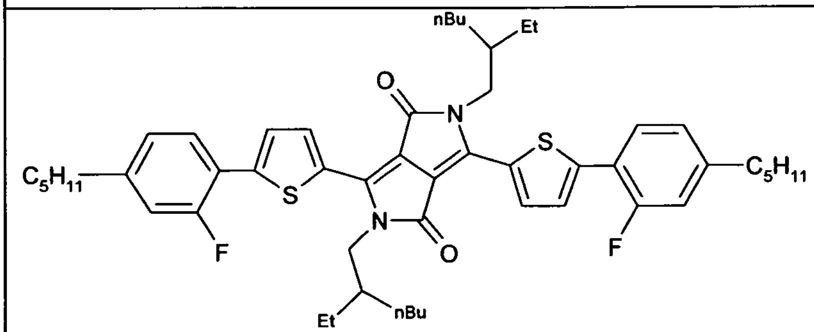 |
| |
| 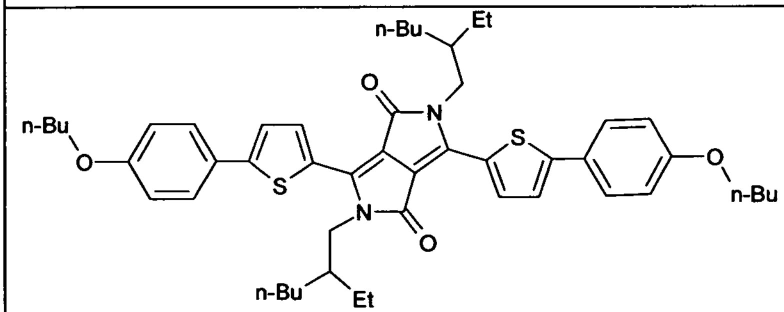 |
| |
| 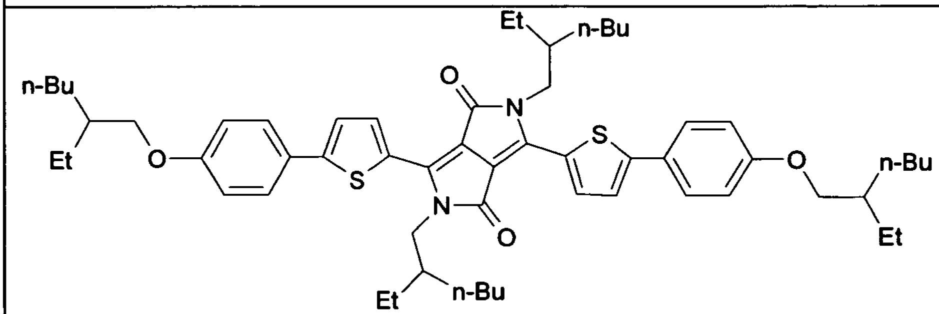 |
| |
| 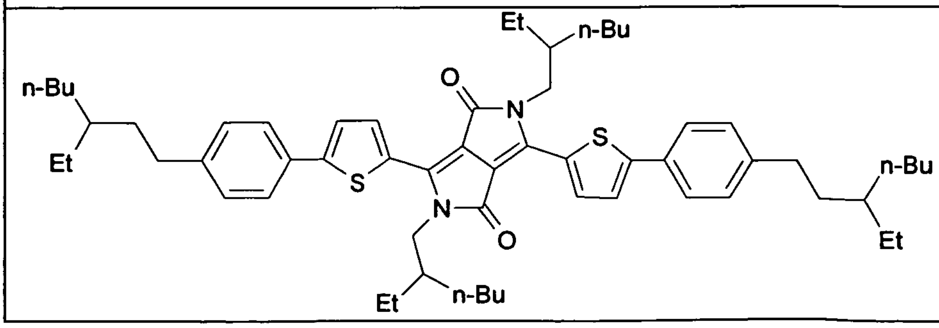 |

| |
|---|
| 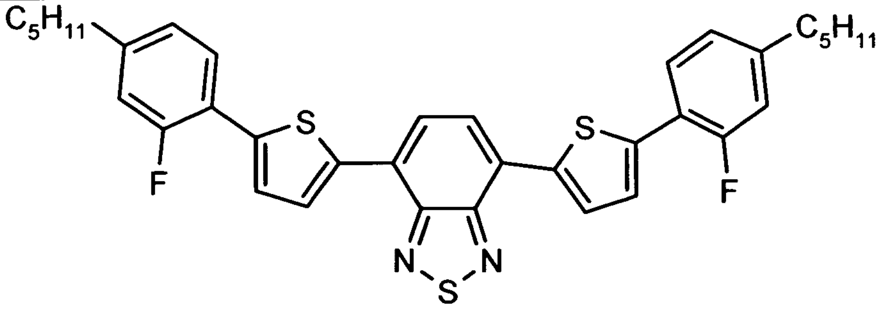 |
| |
| 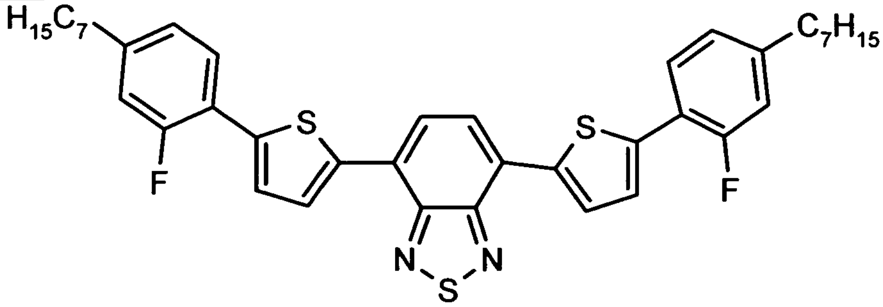 |
| |
| 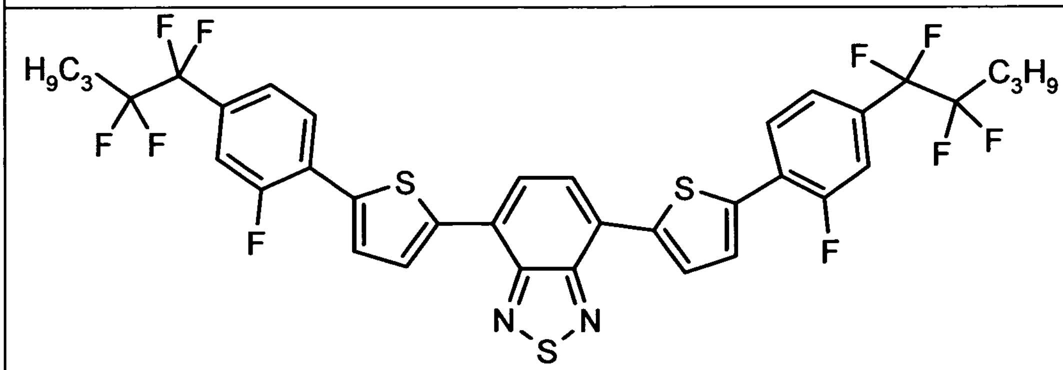 |
| |
| 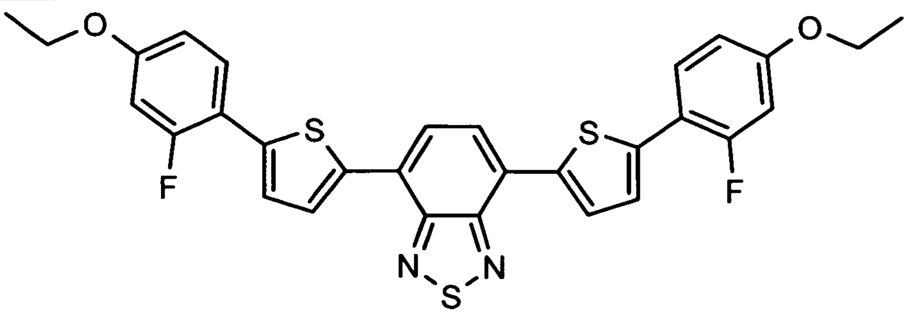 |
| |

| |
|---|
| 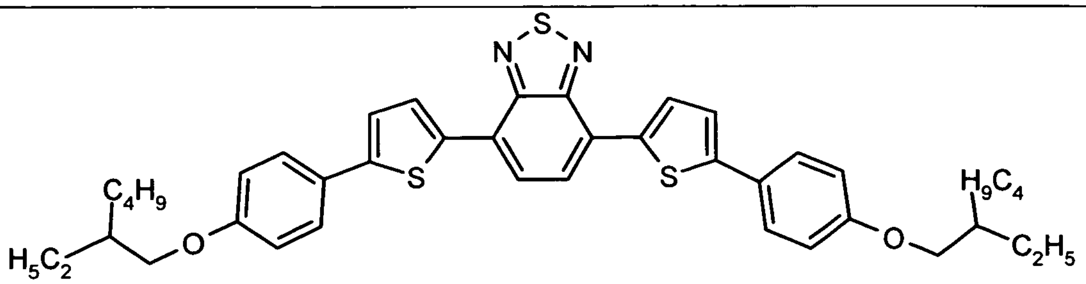 |
| |
| 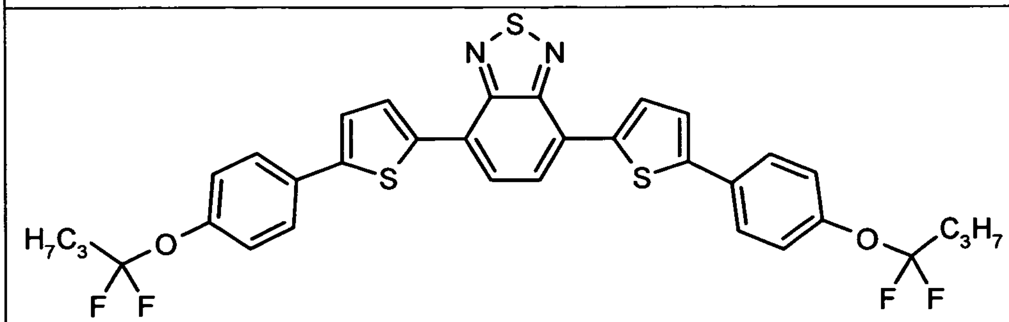 |
| |
| 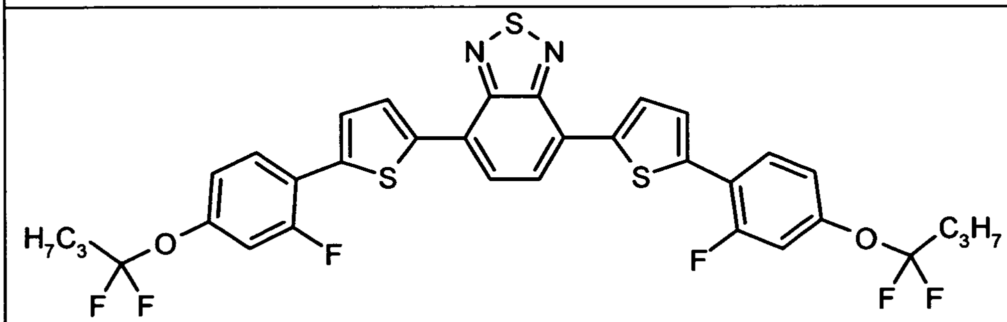 |
| |
| 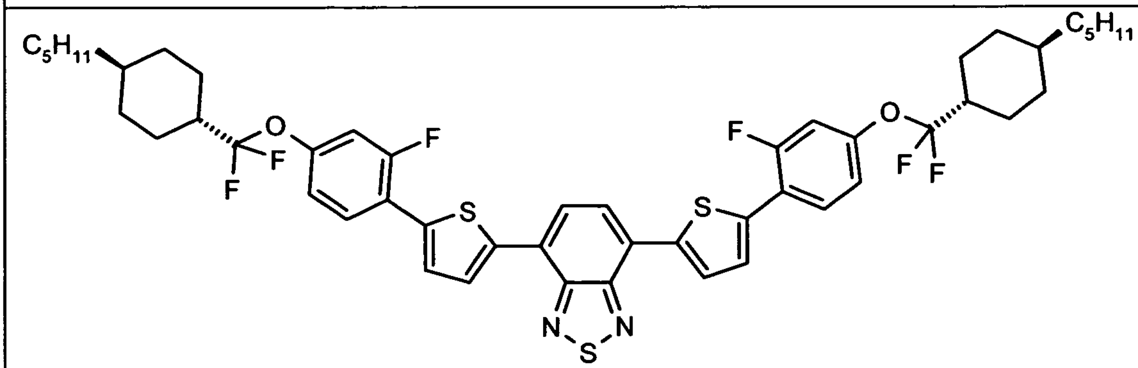 |
| |

| |
|---|
| 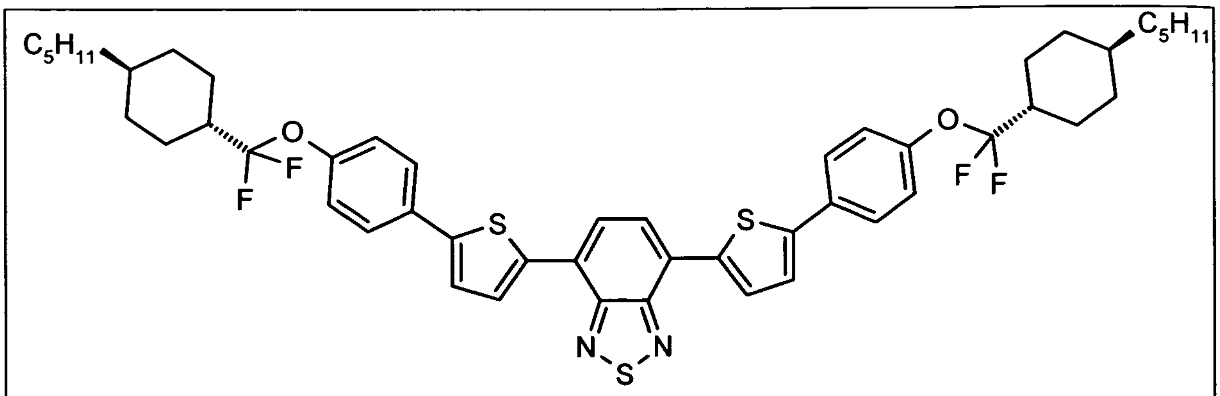 |
| |
| 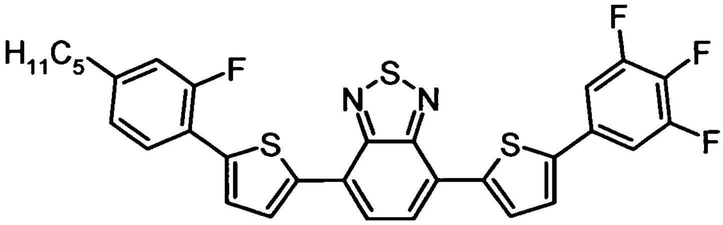 |
| |
| 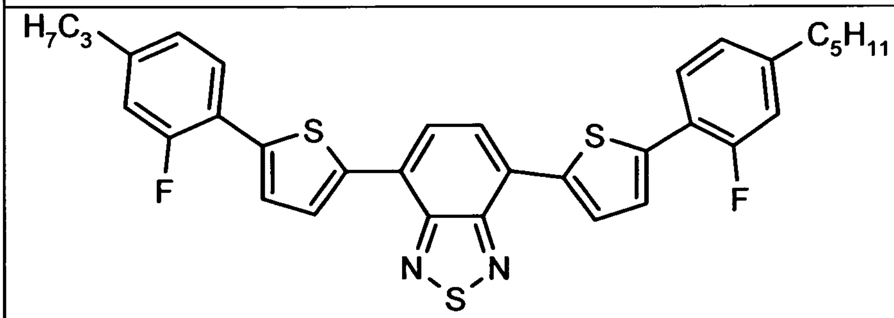 |
| |
| 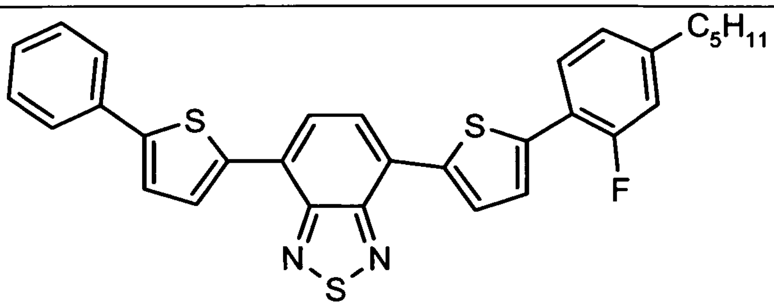 |
| |

| |
|---|
| 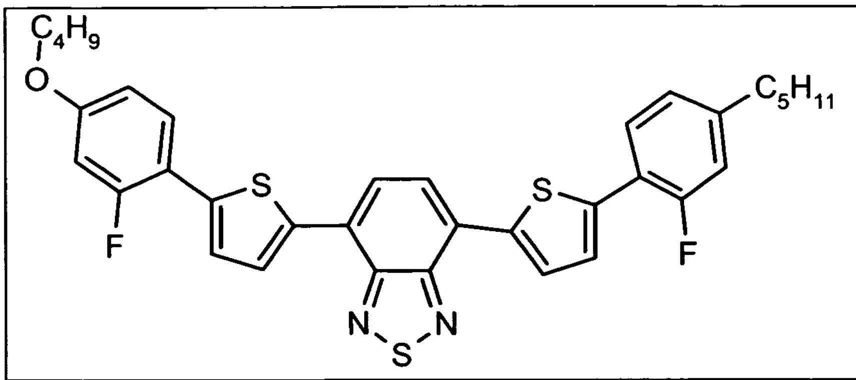 |
| |
| 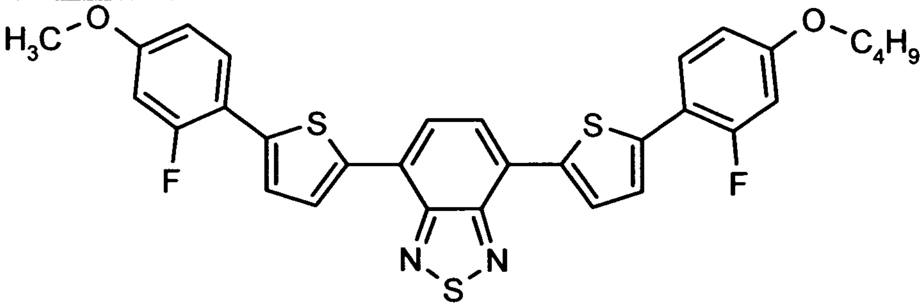 |
| |
| 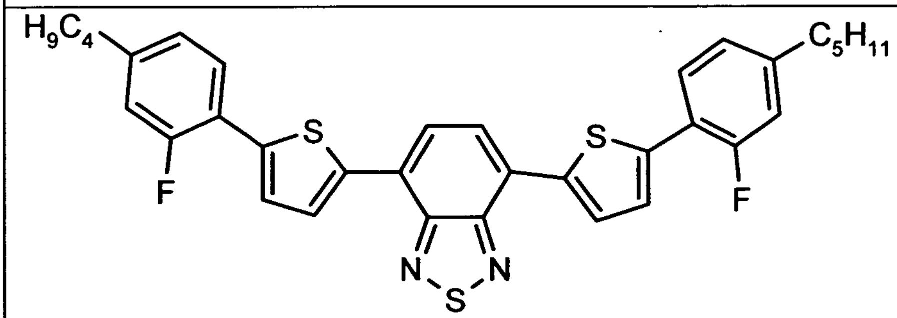 |
| |
| 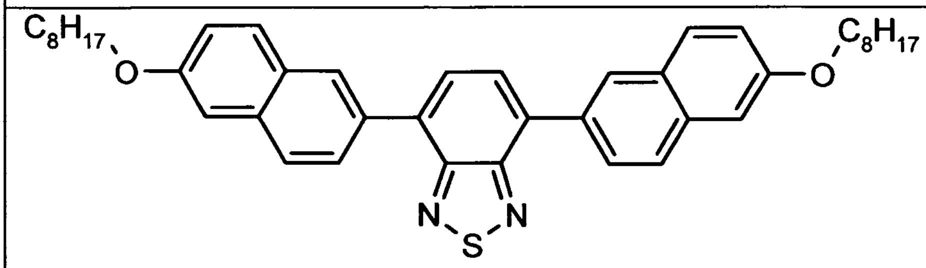 |
| |
| 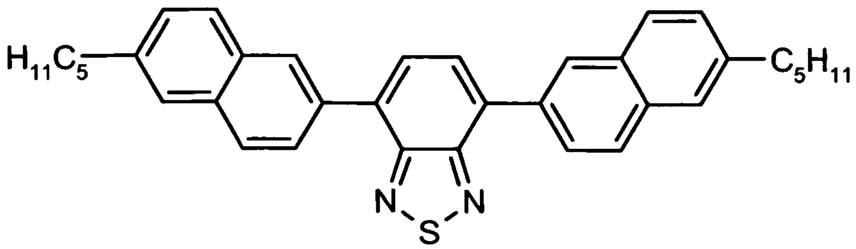 |

| |
|---|
| 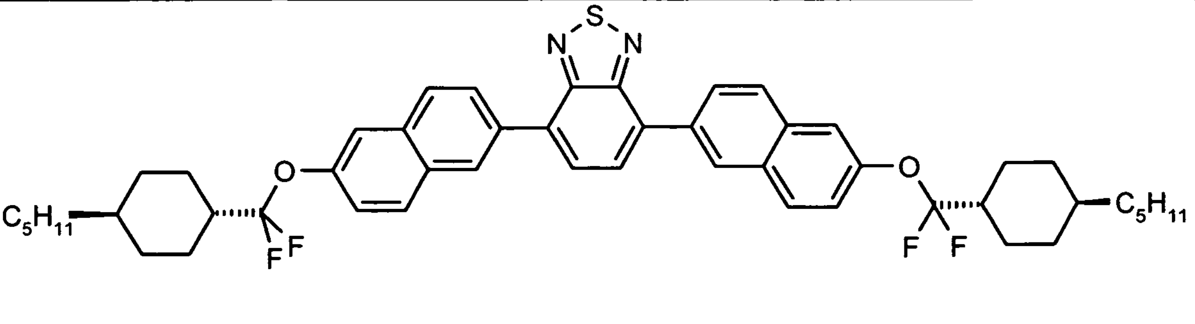 |
| |
| 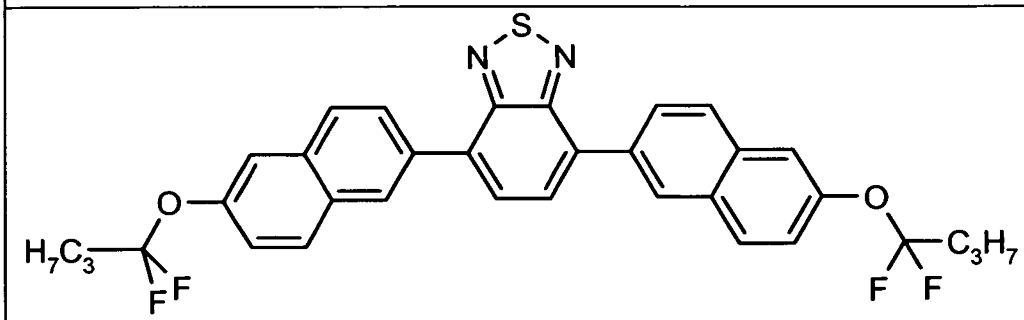 |
| |
| 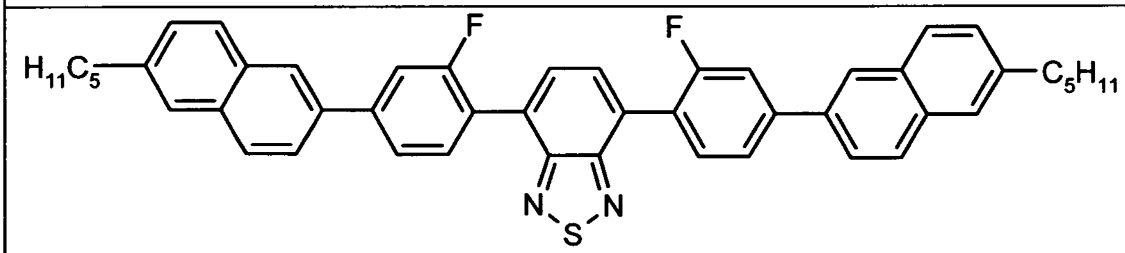 |
| |
| 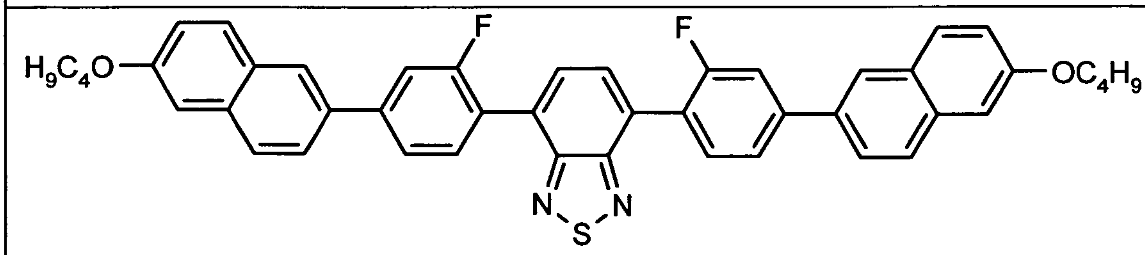 |
| |
| 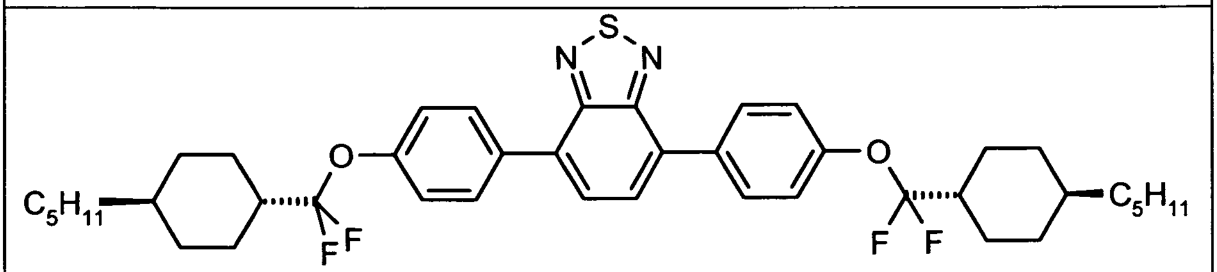 |
| |

| |
|---|
| 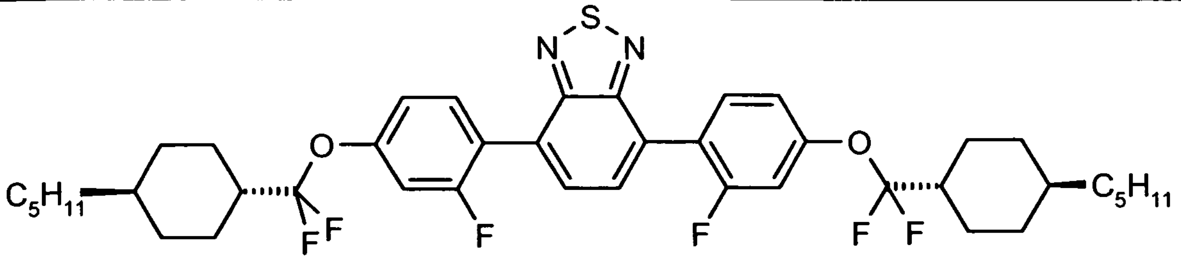 |
| |
| 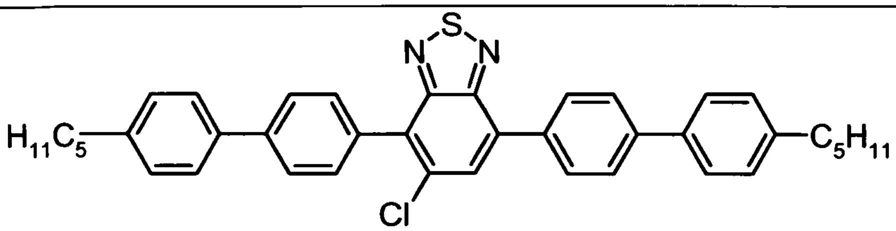 |
| |
| 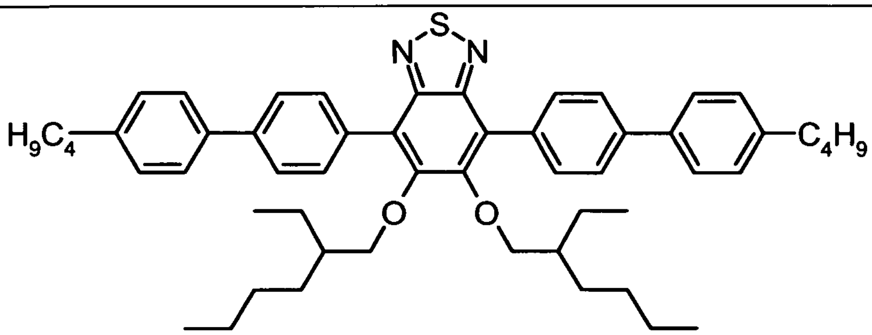 |
| |
| 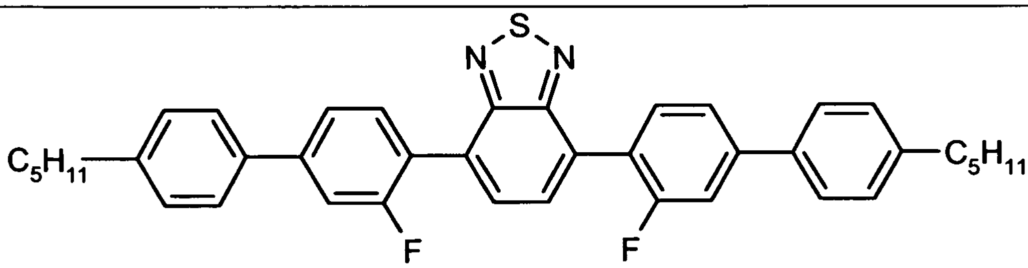 |
| |
| 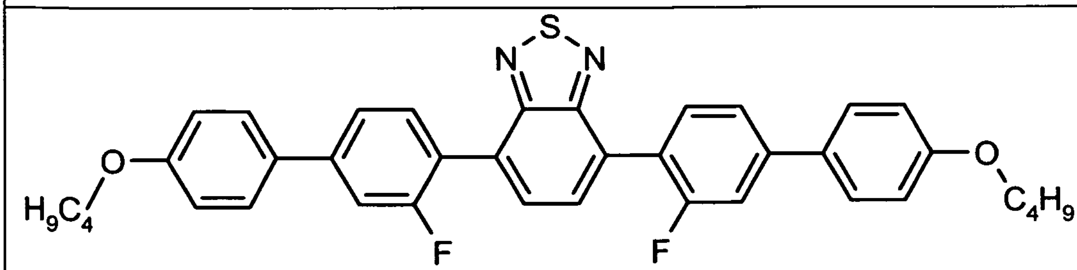 |
| |

| |
|---|
| 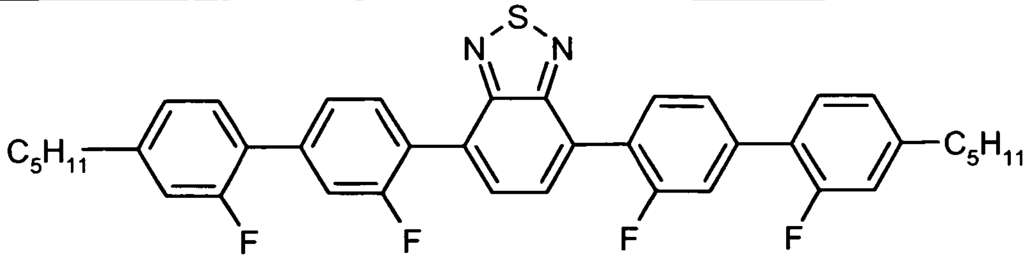 |
| |
| 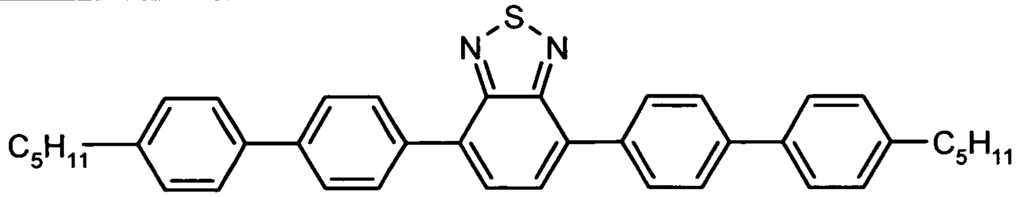 |
| |
| 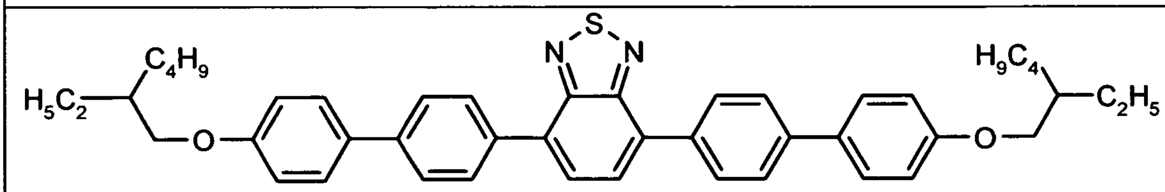 |
| |
| 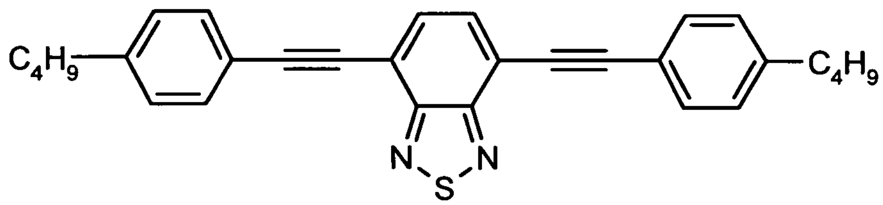 |
| |
| 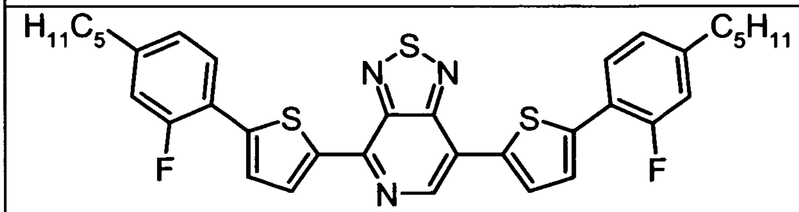 |
| |
| 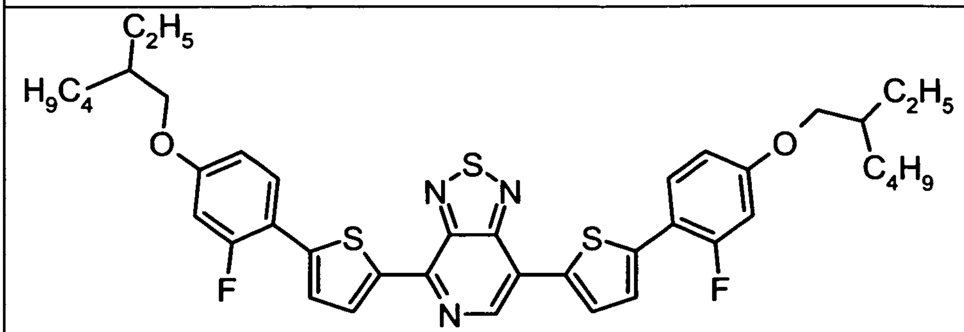 |
| |

| |
|---|
| 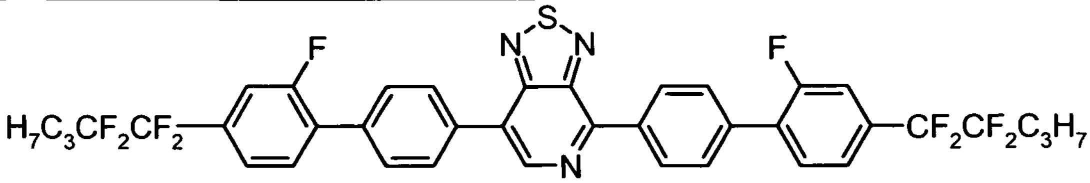 |
| |
| 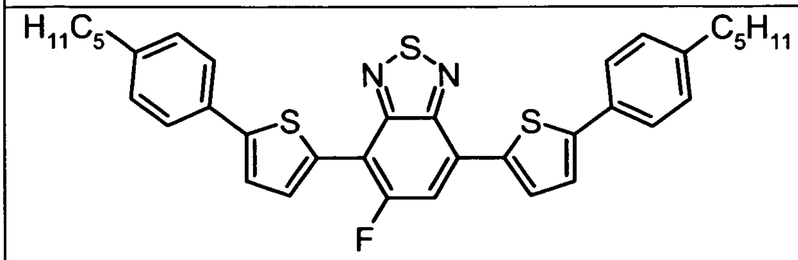 |
| |
| 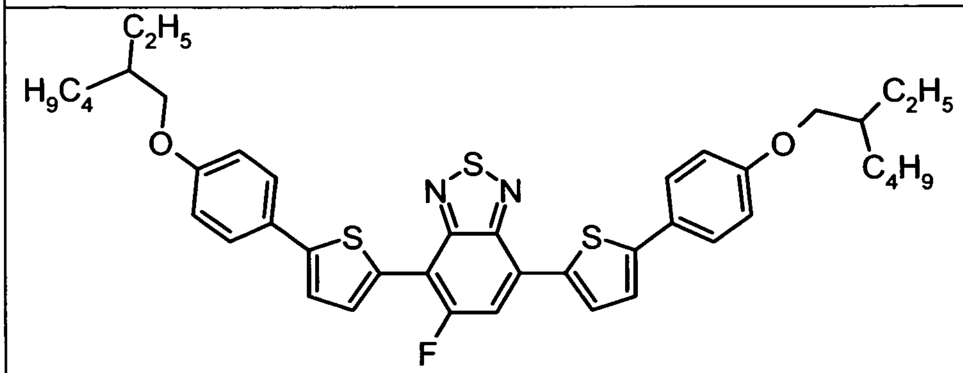 |
| |
| 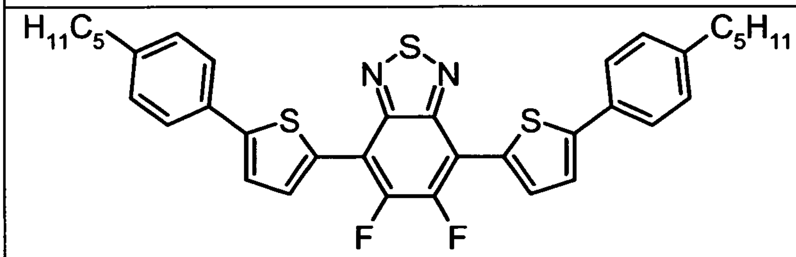 |
| |
| 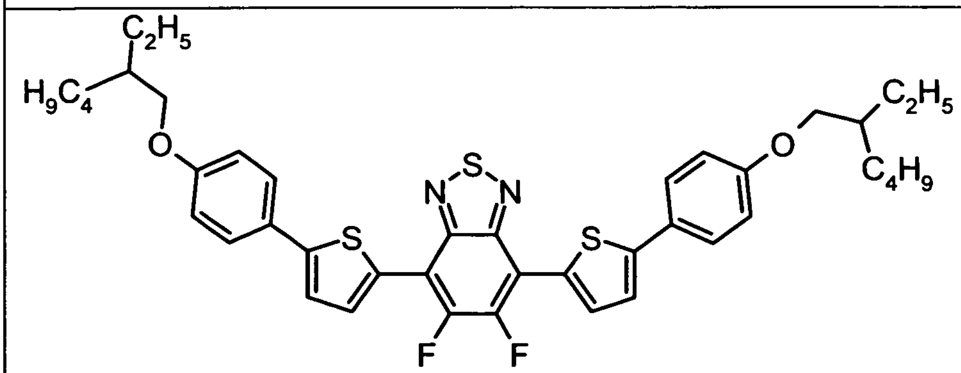 |
| |

| |
|---|
| 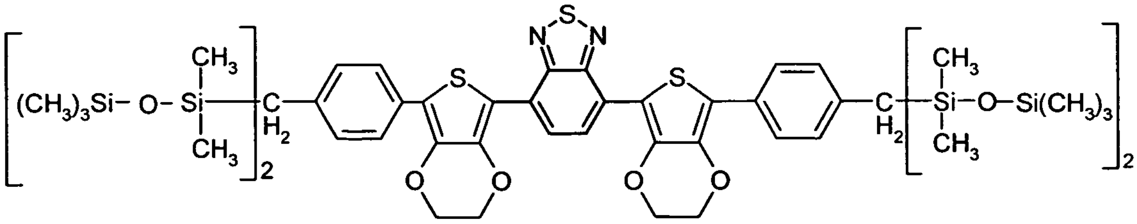 |
| |
| 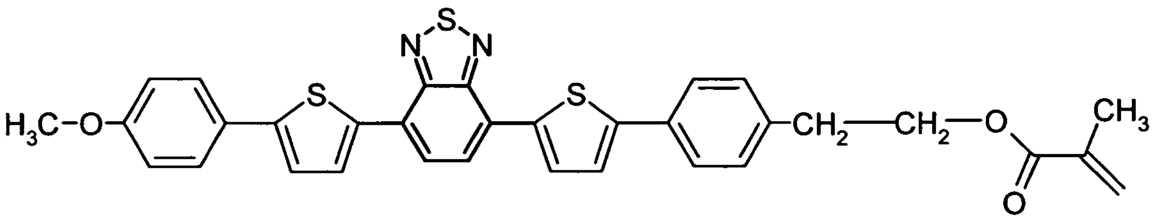 |
| |
| 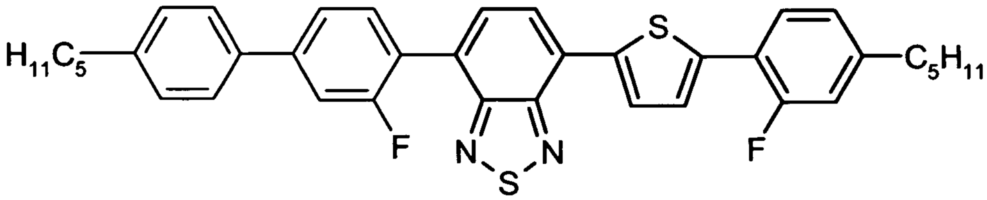 |
| |
| 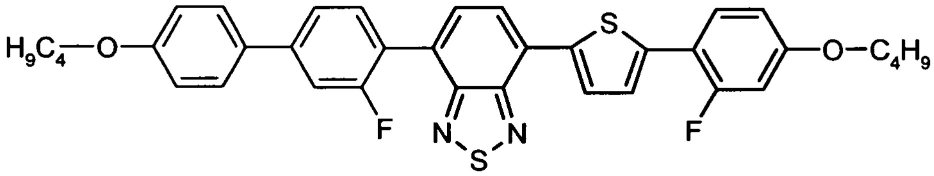 |
| |
| 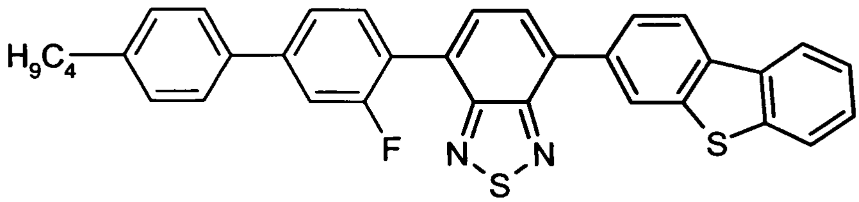 |
| |
| 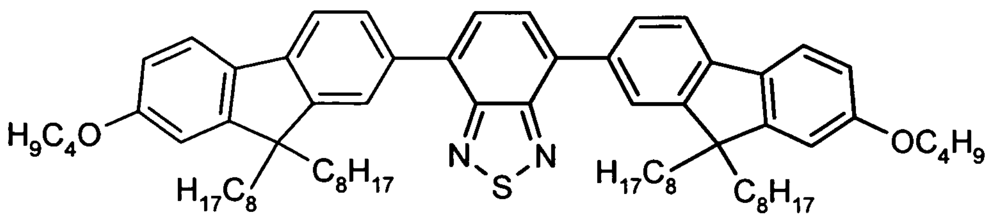 |
| |

| |
|---|
| 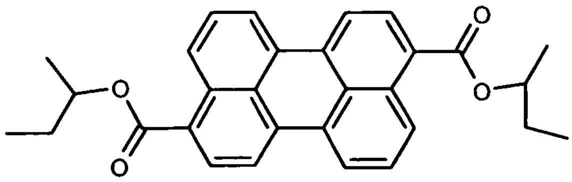 |
| |
| 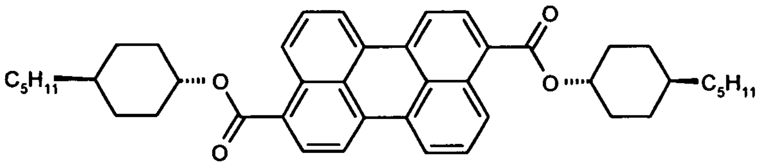 |
| |
| 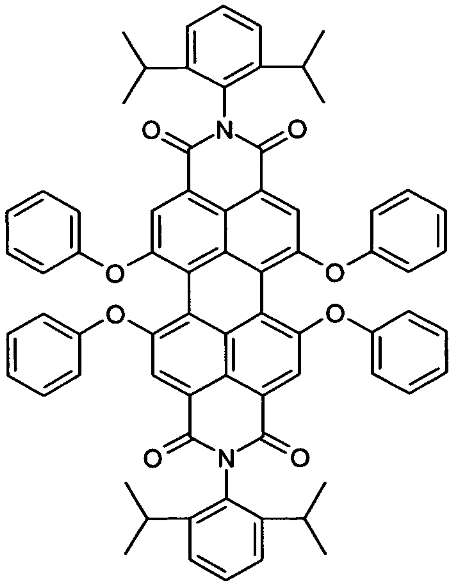 |
| |
| 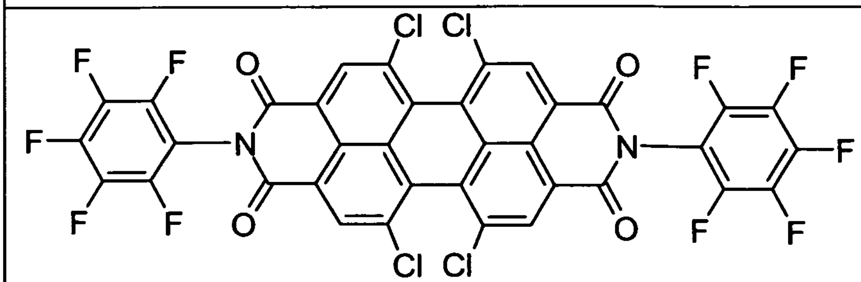 |
| |

| |
|---|
| 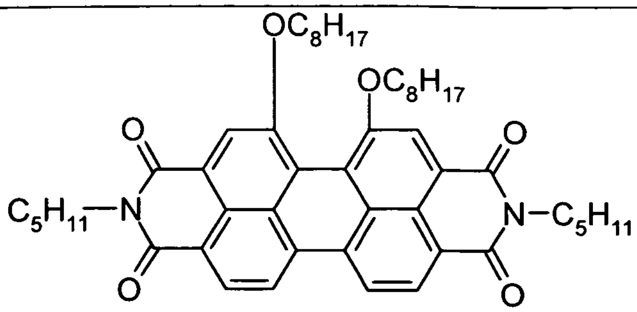 |
| |
| 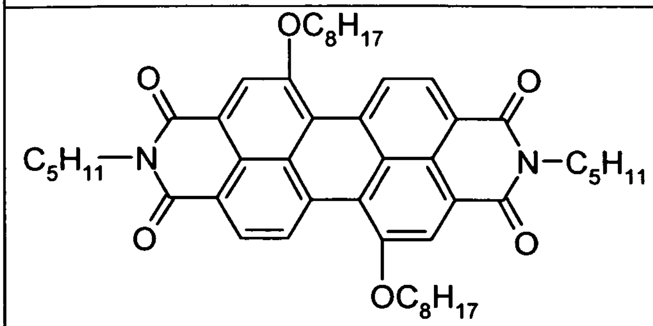 |
| |
| 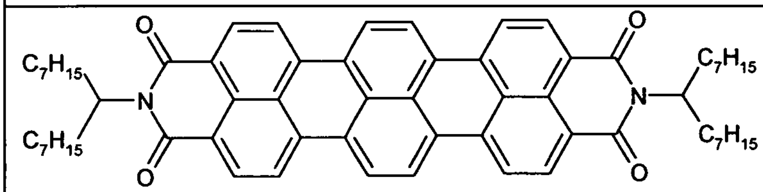 |
| |
| 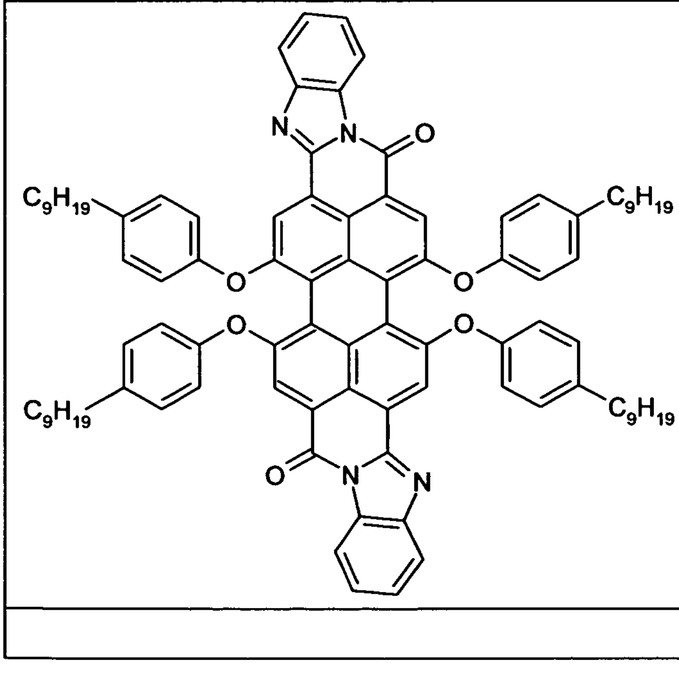 |
| |

| |
|---|
| 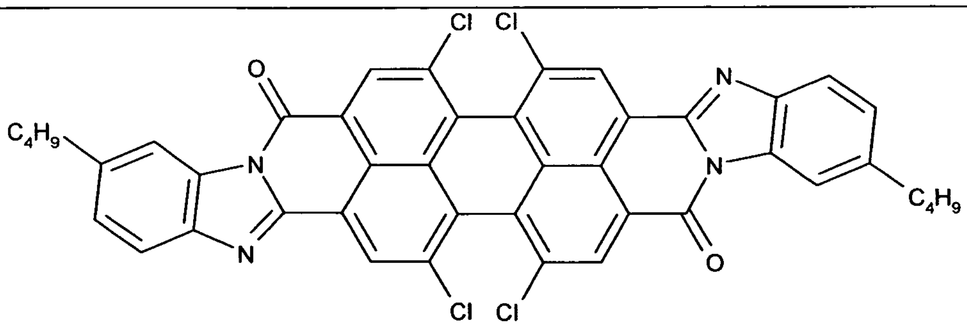 |
| |
| 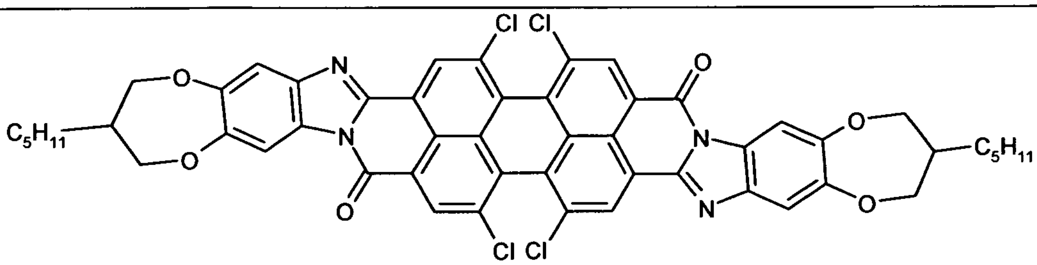 |
| |
| 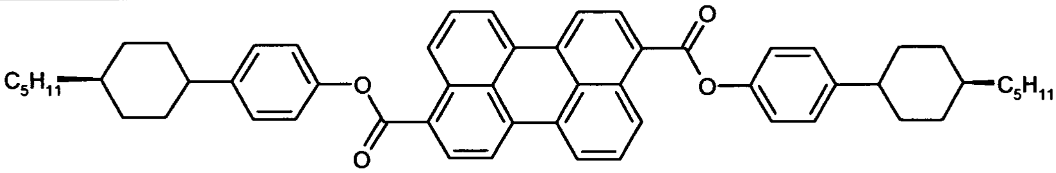 |
| |
| 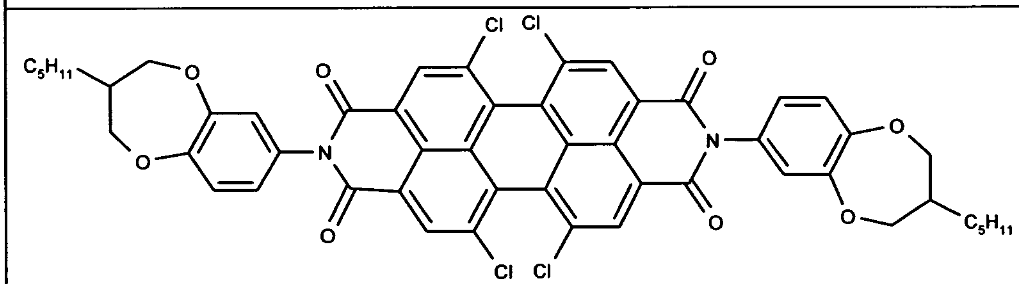 |
| |
| 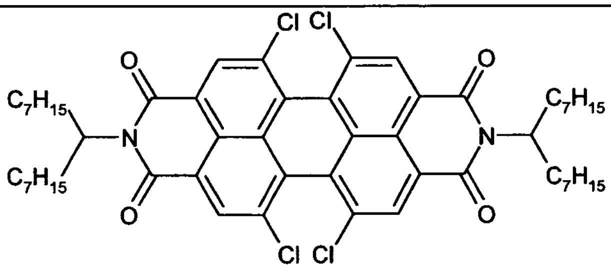 |
| |

| |
|---|
| 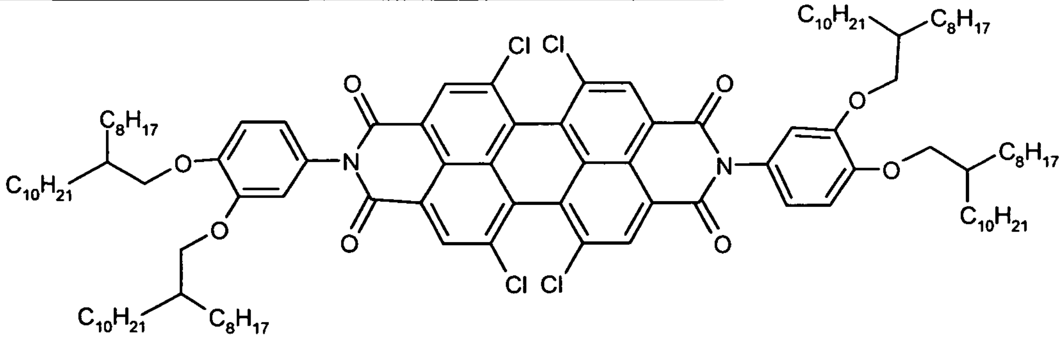 |
| |
| 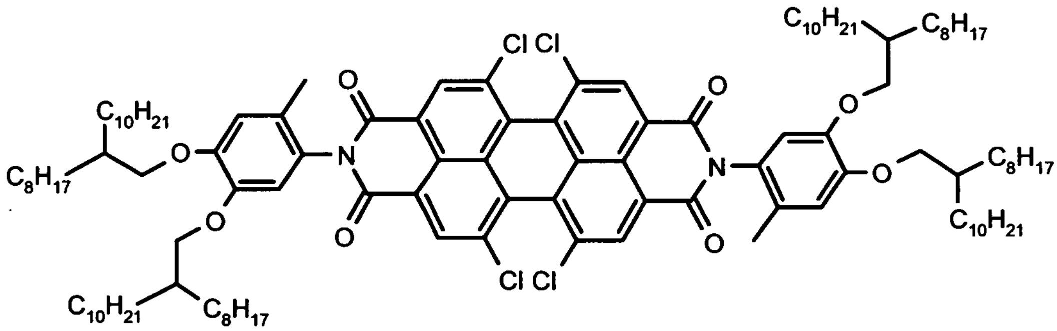 |
| |
| 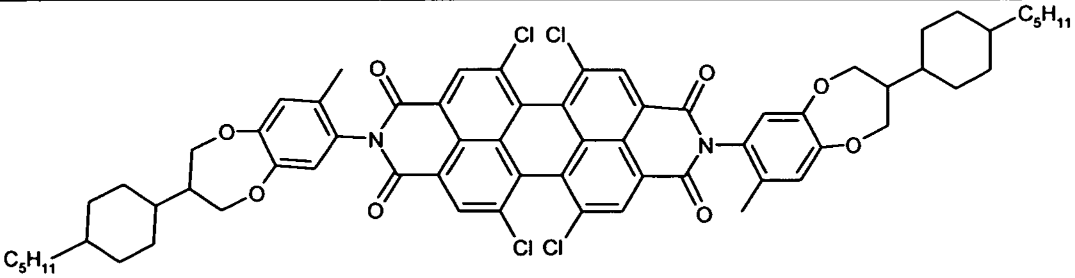 |
| |
| 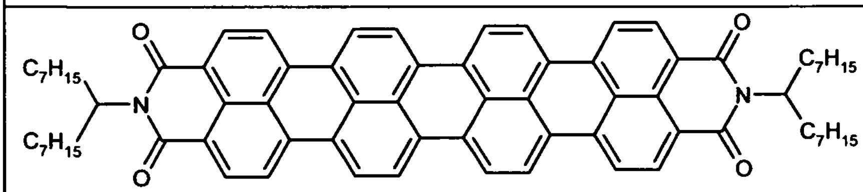 |
| |
| 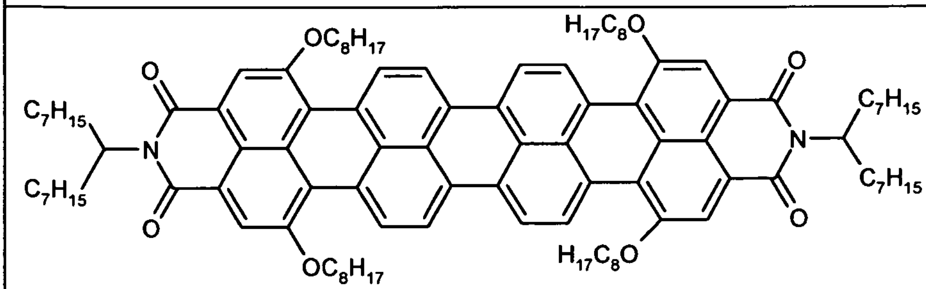 |
| |

| |
|---|
| 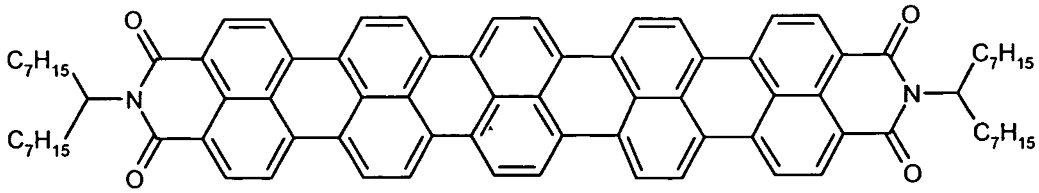 |
| |
| 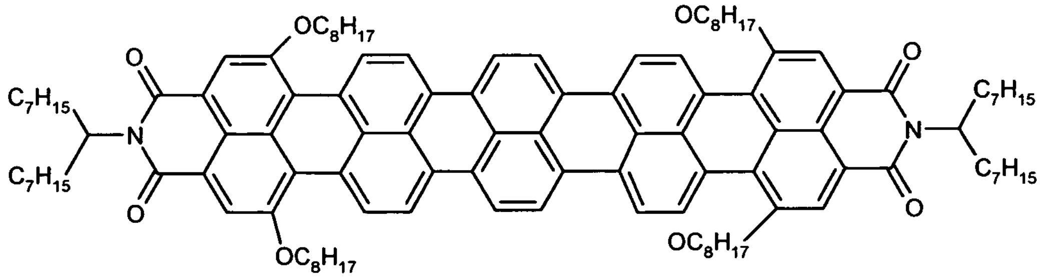 |
| |
| 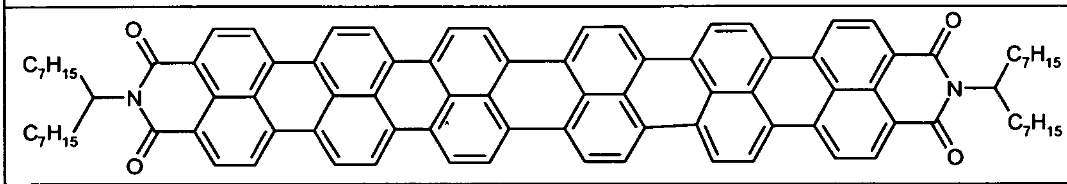 |
| |
| 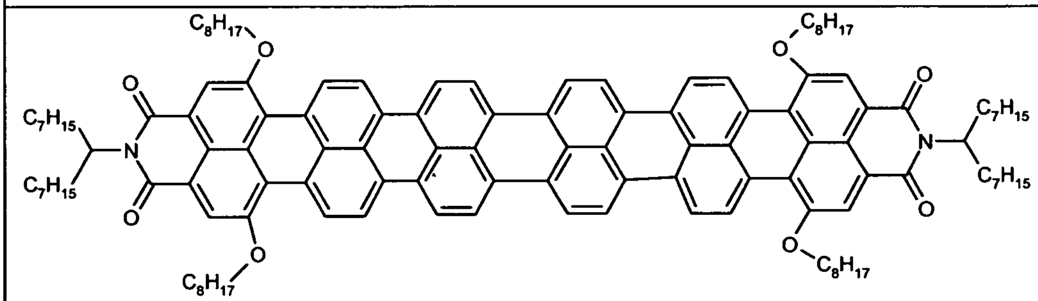 |
| |
| 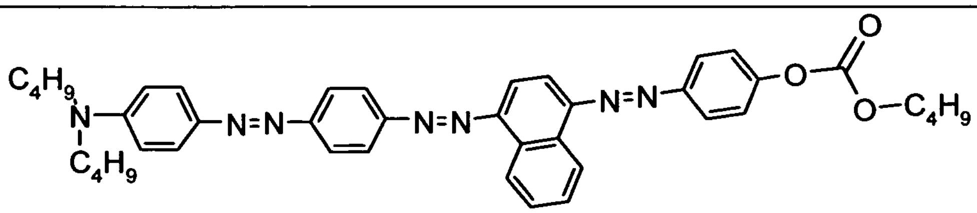 |
| |
| 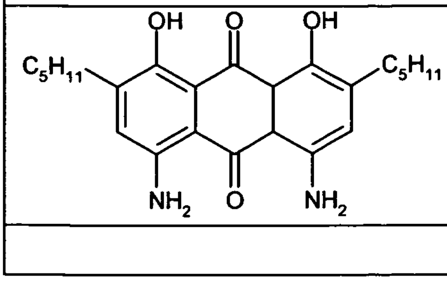 |
| |

| |
|---|
| 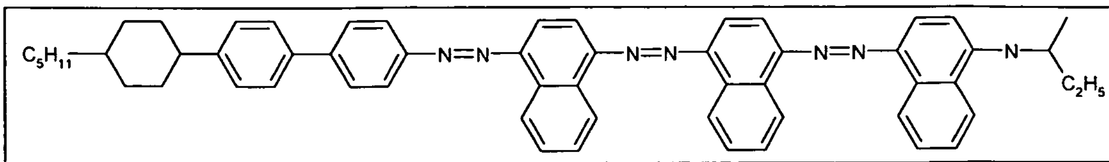 |
| |
| 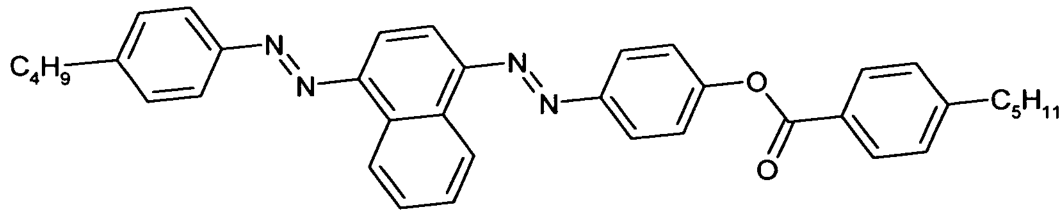 |
| |
| 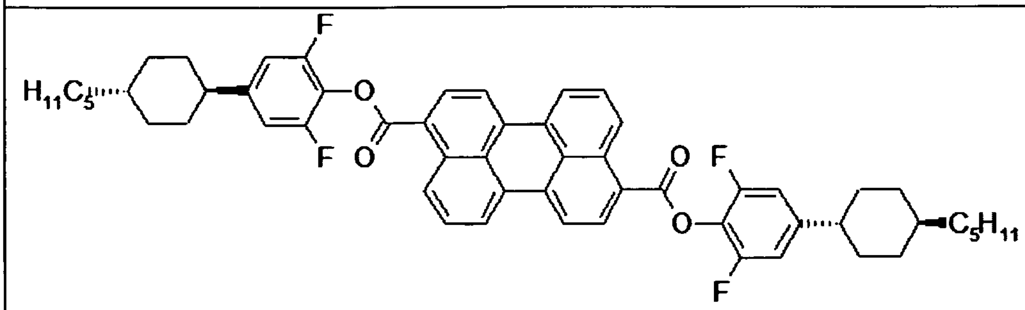 |
| |
| 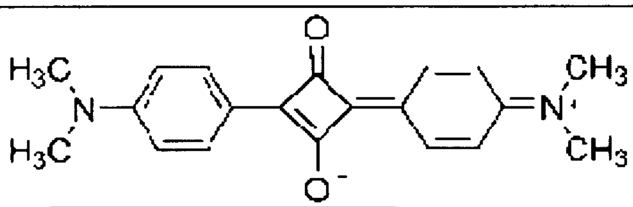 |
| |
| 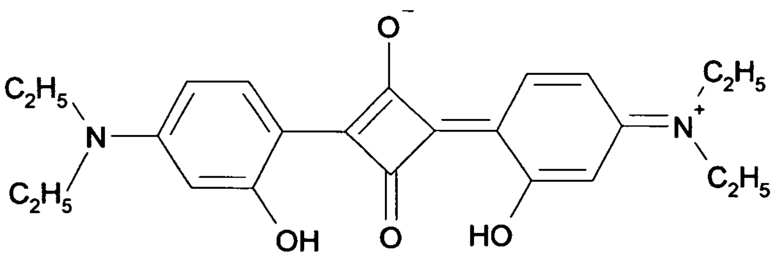 |
| |
| 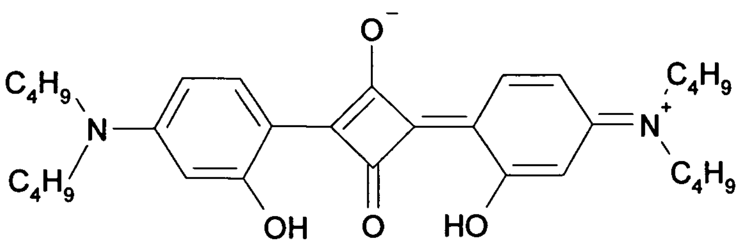 |
| |

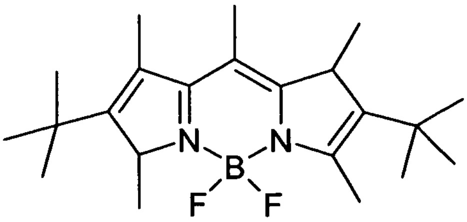

Die schaltbare Schicht S der Vorrichtung umfasst ein flüssigkristallines Medium.

Bevorzugt ist das flüssigkristalline Medium bei Betriebstemperatur der Vorrichtung nematisch flüssigkristallin. Besonders bevorzugt ist es in einer Spanne von +-20 °C, ganz besonders bevorzugt in einer Spanne von +-30 °C über- und unterhalb der Betriebstemperatur der Vorrichtung nematisch flüssigkristallin.

Erfindungsgemäß liegen die Moleküle des flüssigkristallinen Mediums entweder im Schaltzustand der Vorrichtung ohne angelegte Spannung oder im Schaltzustand der Vorrichtung mit angelegter Spannung in einem verdrillt nematischen Zustand vor. Bevorzugt liegen die Moleküle in diesem Zustand weiterhin homogen angeordnet vor.

Bevorzugt liegen die Moleküle des flüssigkristallinen Mediums im Schaltzustand der Vorrichtung ohne angelegte Spannung in einem verdrillt nematischen Zustand und homogen ausgerichtet vor. In diesem Fall ist es weiterhin bevorzugt, dass die Moleküle des flüssigkristallinen Mediums im Zustand mit angelegter Spannung unverdrillt nematisch und homeotrop ausgerichtet vorliegen.

Gemäß einer alternativen Ausführungsform liegen die Moleküle des flüssigkristallinen Mediums im Schaltzustand der Vorrichtung ohne angelegte Spannung unverdrillt nematisch und homeotrop ausgerichtet vor. In diesem Fall ist es weiterhin bevorzugt, dass die Moleküle des flüssigkristallinen Mediums im Zustand mit angelegter Spannung in einem verdrillt nematischen Zustand und homogen ausgerichtet vorliegen. Bevorzugt beträgt die Verdrillung der Orientierungsachsen der Moleküle des flüssigkristallinen Mediums der Schicht S im verdrillt nematischen Zustand über die gesamte Schichtdicke gesehen weniger als eine vollständige Umdrehung, besonders bevorzugt zwischen 30 und 270°, ganz besonders bevorzugt zwischen 100° und 260°, noch stärker bevorzugt zwischen 160 und 255° und am stärksten bevorzugt zwischen 230 und 250°.

Hierdurch wird ein nochmals erhöhter Schalthub erhalten, insbesondere wenn die Vorrichtung auch eine geringe Dicke d der Schaltschicht S aufweist, erfindungsgemäß eine Dicke d der Schaltschicht S, welche der Beziehung

$$d < 0{,}9\ \mu m / \Delta n \text{ und } d > 0{,}2\ \mu m / \Delta n$$

entspricht, mit $\Delta n$ als der optischen Anisotropie des flüssigkristallinen Mediums der Schaltschicht S.

Ein Beispiel für eine solche Verdrillung der Orientierungsachsen der Moleküle des flüssigkristallinen Mediums ist in Fig. 2 gezeigt (vgl. Erläuterung in folgendem Abschnitt).

Gemäß einer alternativen, unter bestimmten Bedingungen bevorzugten Ausführungsform der Erfindung beträgt die Verdrillung der Orientierungsachsen der Moleküle des flüssigkristallinen Mediums der Schicht S im verdrillt nematischen Zustand über die gesamte Schichtdicke betrachtet zwischen 270° und fünf vollständigen Umdrehungen (1800°), bevorzugt zwischen 320° und drei vollständigen Umdrehungen (1080°), besonders bevorzugt zwischen 340° und 740°, und ganz besonders bevorzugt zwischen 360° und 720°. Solche Ausführungsformen sind insbesondere dann bevorzugt, wenn keine Zwischenzustände zwischen den beiden Grundzuständen "Ein" und "Aus" angesteuert werden, sondern nur die genannten beiden Grundzustände.

Weiterhin bevorzugt hat das flüssigkristalline Medium einen Klärpunkt, bevorzugt einen Phasenübergang von einem nematisch flüssigkristallinen Zustand zu einem isotropen Zustand, im Temperaturbereich von 70 °C bis 170 °C, bevorzugt von 90 °C bis 160 °C, besonders bevorzugt von 95 °C bis 150 °C und ganz besonders bevorzugt von 105 °C bis 140 °C.

Bevorzugt ist weiterhin die dielektrische Anisotropie $\Delta\varepsilon$ des flüssigkristallinen Mediums größer als 3, besonders bevorzugt größer als 7, und ganz besonders bevorzugt größer als 8.

Gemäß einer alternativen, ebenfalls bevorzugten Ausführungsform ist die dielektrische Anisotropie des flüssigkristallinen Mediums kleiner als -3, besonders bevorzugt kleiner als -7, und ganz besonders bevorzugt kleiner als -8.

Weiterhin bevorzugt umfasst das flüssigkristalline Medium 3 bis 30 verschiedene Verbindungen, bevorzugt 8 bis 20, besonders bevorzugt 10 bis 18 verschiedene Verbindungen.

Weiterhin bevorzugt hat das flüssigkristalline Medium eine optische Anisotropie ($\Delta n$) von 0.01 bis 0.3, besonders bevorzugt von 0.04 bis 0.27.

Weiterhin bevorzugt hat das flüssigkristalline Medium einen spezifischen elektrischen Widerstand von mehr als $10^{10}$ Ohm*cm.

Verbindungen, welche als Bestandteile des flüssigkristallinen Mediums verwendet werden können, sind dem Fachmann bekannt und können beliebig gewählt werden.

Weiterhin ist es bevorzugt, dass das flüssigkristalline Medium mindestens eine Verbindung enthält, welche Strukturelemente basierend auf 1,4-Phenylenen und 1,4-Cyclohexylenen aufweist. Besonders bevorzugt ist es, dass das flüssigkristalline Medium mindestens eine Verbindung enthält, welche 2, 3 oder 4, besonders bevorzugt 3 oder 4 Strukturelemente basierend auf 1,4-Phenylenen und 1,4-Cyclohexylenen aufweist.

Das erfindungsgemäße flüssigkristalline Medium enthält eine oder mehrere chirale Verbindungen. Diese liegen bevorzugt in einer Gesamtkonzentration von 0.01 bis 3 Gew.-%, besonders bevorzugt von 0.05 bis 1 Gew.-% vor. Um hohe Werte für die Verdrillung zu erhalten, kann die Gesamtkonzentration der chiralen Verbindungen auch höher als 3 Gew.-% gewählt werden, bevorzugt bis maximal 10 Gew.-%. Durch die Verwendung eines chiralen Dotanden im flüssigkristallinen Medium kann die Richtung der Verdrillung im Sinne einer rechts- oder linksgängigen Helix eingestellt werden.

Es können auch Kombinationen von zwei oder mehr verschiedenen chiralen Dotierstoffen verwendet werden. Dadurch kann die Temperaturstabilität der Vorrichtung verbessert werden.

Gemäß einer möglichen Ausführungsform der Erfindung sind die chiralen Dotierstoffe auch mit lichtabsorbierenden Eigenschaften ausgestattet, sind also Farbstoffe.

Bevorzugt ist die chirale Verbindung so gewählt, dass sie eine Helixganghöhe p der Moleküle des flüssigkristallinen Mediums induziert, die folgender Gleichung entspricht, wobei d die Dicke der Schicht S ist:

$0.1 < d/p < 0.75$, bevorzugt

$0.3 < d/p < 0.65$, besonders bevorzugt

$0.4 < d/p < 0.55$.

Besonders bevorzugt ist es, dass der Wert für den Quotienten d/p der Verdrillung der Orientierungsachsen der Moleküle des flüssigkristallinen Mediums der Schicht S angepasst ist. Insbesondere ist es bevorzugt, dass für eine Verdrillung von 180° ein Wert für d/p von 0.1 bis 0.7 gewählt wird, für eine Verdrillung von 220° ein Wert für d/p von 0.23 bis 0.73 gewählt wird, für eine Verdrillung von 240° ein Wert für d/p von 0.28 bis 0.78 gewählt wird, und für eine Verdrillung von 270° ein Wert für d/p von 0.33 bis 0.77 gewählt wird. Für Zwischenwerte der Verdrillung ist entsprechend zu interpolieren.

Bevorzugte chirale Verbindungen zur Verwendung in der erfindungsgemäßen Vorrichtung sind die in der folgenden Tabelle abgebildeten Verbindungen:

| |
|---|
| 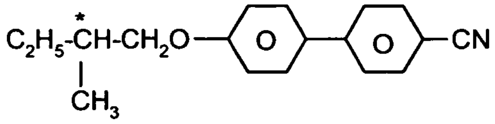 |
| |
| 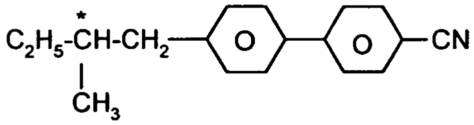 |
| |
| 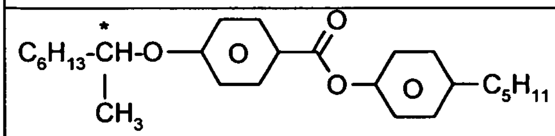 |
| |
| 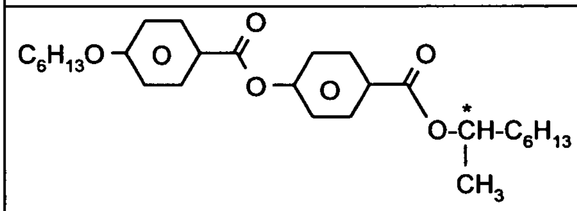 |
| |
| 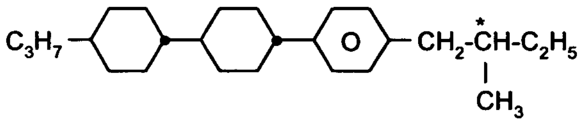 |
| |
| 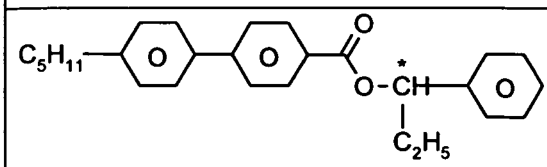 |
| |
| 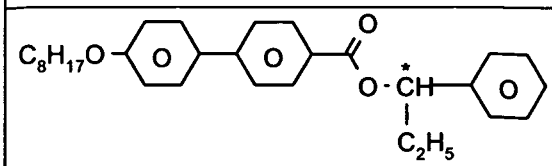 |
| |

| |
|---|
| 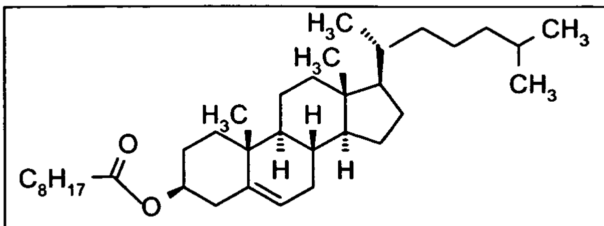 |
| |
| 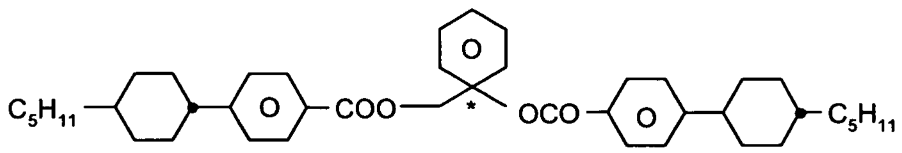 |
| |
| 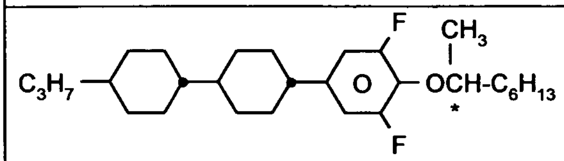 |
| |
| 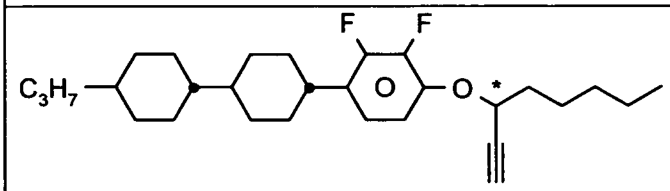 |
| |
| 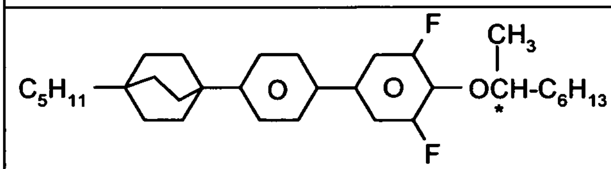 |
| |
| 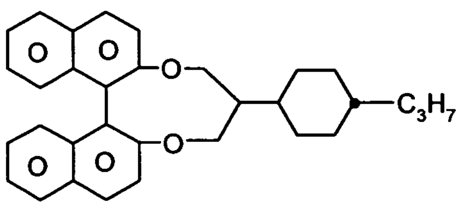 |

Das flüssigkristalline Medium enthält bevorzugt einen oder mehrere Stabilisatoren. Die Gesamtkonzentration der Stabilisatoren liegt bevorzugt zwischen 0.00001 und 10 Gew.-%, besonders bevorzugt zwischen 0.0001 und 1 Gew.-% der Gesamtmischung.

Die Vorrichtung weist bevorzugt Mittel zur Ausrichtung der Moleküle des flüssigkristallinen Mediums der Schicht S durch elektrische Spannung auf. Bevorzugt weist sie zwei oder mehr Elektroden auf, die zu beiden Seiten der Schicht S angebracht sind. Die Elektroden bestehen bevorzugt aus ITO oder aus einer dünnen, bevorzugt transparenten Metall- und/oder Metalloxidschicht, beispielsweise aus Silber oder einem alternativen, dem Fachmann für diese Verwendung bekannten Material. Die Elektroden sind bevorzugt mit elektrischen Anschlüssen versehen. Die Stromversorgung wird bevorzugt durch eine Batterie, einen Akkumulator, eine Superkapazität oder durch externe Stromversorgung bereitgestellt.

Die erfindungsgemäße Vorrichtung weist bevorzugt die folgende Schichtabfolge auf, wobei die Schichten bevorzugt unmittelbar aneinander angrenzen (vgl. auch Fig. 1):

1) Substratschicht, bevorzugt Glasschicht oder Polymerschicht
2) elektrisch leitende Schicht, bevorzugt ITO-Schicht
3) Orientierungsschicht O1
4) schaltbare Schicht S
5) Orientierungsschicht O2
6) elektrisch leitende Schicht, bevorzugt ITO-Schicht
7) Substratschicht, bevorzugt Glasschicht oder Polymerschicht.

Dabei ist nicht ausgeschlossen, dass die Vorrichtung weitere Schichten umfasst.

Gemäß einer bevorzugten Ausführungsform ist die erfindungsgemäße Vorrichtung dadurch gekennzeichnet, dass sie sämtliche Energie, die sie zur Schaltung der schaltbaren Schicht S benötigt, selbst erzeugt. Die Vorrichtung ist also bevorzugt autonom und benötigt keine von außen zugeführte Energie. Dazu umfasst sie bevorzugt eine Vorrichtung zur Umwandlung von Lichtenergie in elektrische Energie, besonders bevorzugt eine Solarzelle.

In einer bevorzugten Ausführungsform der Erfindung ist die Vorrichtung zur Umwandlung von Lichtenergie in elektrische Energie elektrisch mit den Mitteln zur elektrischen Schaltung der erfindungsgemäßen Vorrichtung verbunden. Die Bereitstellung der Energie durch die Solarzelle kann direkt oder indirekt, d. h. über eine dazwischengeschaltete Batterie oder Akkumulator oder sonstige Einheit zur Speicherung von Energie, erfolgen. Bevorzugt ist die Solarzelle außen an der Vorrichtung angebracht oder sie ist innen in der Vorrichtung angebracht, wie beispielsweise in WO 2009/141295 offenbart. Bevorzugt eingesetzt werden Solarzellen, die bei diffusem Licht besonders effizient sind, sowie transparente Solarzellen. Es können beispielsweise Silicium-Solarzellen oder organische Solarzellen in den erfindungsgemäßen Vorrichtungen verwendet werden.

Weiterhin bevorzugt enthält die erfindungsgemäße Vorrichtung ein Lichtleitsystem, welches Licht aus der schaltbaren Schicht S zu einer Einheit leitet, welche Lichtenergie in elektrische Energie oder Wärmeenergie umwandelt. Bevorzugt ist das Lichtleitsystem aufgebaut wie in WO 2009/141295 beschrieben. Das Lichtleitsystem sammelt und konzentriert Licht, das auf die Vorrichtung trifft. Bevorzugt sammelt und konzentriert es Licht, das von fluoreszierenden dichroitischen Verbindungen in der schaltbaren Schicht S enthaltend das flüssigkristalline Medium emittiert wird. Das Lichtleitsystem steht mit einer Vorrichtung zur Umwandlung von Lichtenergie in elektrische Energie, bevorzugt einer Solarzelle, in Kontakt, so dass das gesammelte Licht konzentriert auf diese trifft.

Bevorzugt leitet das Lichtleitsystem Licht durch innere Totalreflexion. Bevorzugt ist die Vorrichtung dadurch gekennzeichnet, dass das Lichtleitsystem mindestens einen Wellenlängen-selektiven Spiegel aufweist, welcher bevorzugt gewählt ist aus einer oder mehreren cholesterischen Flüssigkristallschichten.

Bevorzugt ist die erfindungsgemäße Vorrichtung dadurch gekennzeichnet, dass sie eine oder mehrere Glasschichten umfasst, welche in entspiegelter Ausführung vorliegen. Die Herstellung von Antireflexionsbeschichtungen erfolgt durch Beschichtungsmethoden der Dünnschichttechnik. Dazu zählen beispielsweise die physikalische Gasphasenabscheidung, wie thermisches Verdampfen und Sputterdeposition. Die Entspiegelung kann durch ein Einfachschichtsystem oder durch ein Mehrfachschichtsystem erreicht werden.

Bevorzugt ist die erfindungsgemäße Vorrichtung dadurch gekennzeichnet, dass sie zwei oder mehr Glasschichten aufweist, und dass der Lichtreflexionsgrad $\rho_V$ nach Norm EN410 der Gesamtheit der Schichten der Vorrichtung mit Ausnahme der schaltbaren Schicht S kleiner als 35 % ist, bevorzugt kleiner als 30 % ist, besonders bevorzugt kleiner als 25 % ist und ganz besonders bevorzugt kleiner als 20 % ist.

Besonders bevorzugt liegt ein wie oben angegebener Lichtreflexionsgrad $\rho_V$ nach Norm EN410 der Gesamtheit der Schichten der Vorrichtung mit Ausnahme der schaltbaren Schicht S vor, und die Vorrichtung enthält drei oder mehr Glasschichten.

Der Lichtreflexionsgrad $\rho_V$ der Vorrichtung wird bestimmt, indem mit einem Spektralphotometer die spektralen Reflektionsgrade der Schichtenanordnung gemessen werden, und indem daraus gemäß der Norm EN410, Gleichung (4), unter Berücksichtigung der relativen spektralen Verteilung der Normlichtart und des spektralen Hellempfindlichkeitsgrad des Normalbeobachters der Parameter $\rho_V$ berechnet wird.

Die erfindungsgemäße Vorrichtung kann für beliebige Räume verwendet werden, inbesondere für solche Räume, die nur begrenzten Luftaustausch mit der Umgebung aufweisen und lichtdurchlässige Begrenzungsflächen aufweisen, durch die Energie-Eintrag von außen in Form von Lichtenergie stattfinden kann. Die Vorrichtung ist bevorzugt auf einer lichtdurchlässigen Fläche oder in einer Öffnung eines Gebäudes, eines Containers, eines Fahrzeugs oder eines sonstigen weitgehend geschlossenen Raums aufgebracht. Besonders bevorzugt ist die Verwendung der Vorrichtung für Räume, welche starker Sonneneinstrahlung durch lichtdurchlässige Flächen, beispielsweise durch Fensterflächen, ausgesetzt sind.

Bevorzugt ist die erfindungsgemäße Vorrichtung zur homogenen Regulierung des Lichteintritts durch eine Fläche in einen Raum geeignet. Unter homogen wird dabei verstanden, dass der der Lichteintritt durch die Fläche über eine größere Ausdehnung gleichmäßig stark ist. Bevorzugt beträgt die Ausdehnung mindestens 0.01 $m^2$, besonders bevorzugt mindestens 0.1 $m^2$, ganz besonders bevorzugt mindestens 0.5 $m^2$, und am stärksten bevorzugt mindestens

1 $m^2$. Homogen, also gleichmäßig, ist dabei in Abgrenzung zu gemustert oder nach Domänen unterteilt (gepixelt) zu verstehen, wie es bei optischen Schaltvorrichtungen der Fall ist, die in Anzeigevorrichtungen verwendet werden. Geringfügige Abweichungen von der Homogenität, insbesondere wenn sie durch Defekte entstehen, werden bei dieser Definition vernachlässigt.

Weiterer Gegenstand der Erfindung ist die Verwendung der erfindungsgemäßen Vorrichtung zur homogenen Regulierung des Lichteintritts durch eine lichtdurchlässige Fläche in einen Raum.

Die erfindungsgemäße Vorrichtung kann zusätzlich auch zur ästhetischen Raumgestaltung eingesetzt werden, beispielsweise indem sie Licht- und Farbeffekte erzeugt. Auch kann sie zur Signalerzeugung verwendet werden. Beispielsweise können Tür- und Wandelemente enthaltend die erfindungsgemäße Vorrichtung von einem lichtundurchlässigen, beispielsweise grauen oder farbigen Zustand in einen transparenten Zustand geschaltet werden. Die Vorrichtung kann auch eine weiße oder farbige flächige Hinterleuchtung, die in der Helligkeit moduliert wird, oder eine gelbe flächige Hinterleuchtung, die mit einer blauen Gast-Wirtsanzeige in ihrer Farbe moduliert wird, umfassen. Weitere ästhetische Effekte können durch seitlich einstrahlende Lichtquellen wie weiße oder farbige LEDs in Kombination mit der erfindungsgemäßen Vorrichtung erzeugt werden. Auch können eine oder beide Glasseiten der erfindungsgemäßen Vorrichtung mit angerauhtem oder strukturiertem Glas versehen sein zur Lichtauskopplung oder zur Lichteffekterzeugung.

In einer bevorzugten Ausführungsform ist die erfindungsgemäße Vorrichtung Bestandteil eines Fensters, besonders bevorzugt eines Fensters mit Mehrscheiben-Isolierglas. Dabei können eine oder beide der optionalen Substratschichten der Vorrichtung die Scheiben des Fensters darstellen.

Bevorzugt umfasst das Fenster enthaltend die Vorrichtung insgesamt drei oder mehr Glasscheiben. Dabei ist es bevorzugt, dass die Vorrichtung zwischen zwei Glasscheiben des Fensters angeordnet ist.

Gemäß einer bevorzugten Ausführungsform ist die Vorrichtung im Inneren von Mehrscheiben- Isolierglas angebracht oder außen an einem solchen Glas angebracht. Allgemein bevorzugt ist die Verwendung auf einer zum Innenraum hin gerichteten Seite einer Scheibe oder im Zwischenraum zwischen zwei Glasscheiben bei Mehrscheiben- Isolierglas. Es sind jedoch auch andere Anordnungen denkbar und in bestimmten Fällen vorzuziehen. Der Fachmann kann dabei Vor- und Nachteile bestimmter Anordnungen bezüglich der Haltbarkeit der Vorrichtung, optischen und ästhetischen Gesichtspunkten, praktischen Gesichtspunkten bezüglich der Reinigung der Scheiben sowie bezüglich der Reaktivität der Vorrichtung gegenüber Temperaturänderungen gegeneinander abwägen.

Besonders bevorzugt ist eine Anordnung, bei der eine erste Glasscheibe des Fensters durch eine Glasscheibe der Vorrichtung gebildet ist, so dass die Schichtenabfolge des Fensters enthaltend die Vorrichtung wie folgt ist:

1) Glasschicht
2) elektrisch leitende Schicht, bevorzugt ITO-Schicht
3) Orientierungsschicht
4) schaltbare Schicht S
5) Orientierungsschicht
6) elektrisch leitende Schicht, bevorzugt ITO-Schicht
7) Glasschicht
8) Glasschicht,

wobei zwischen der Glasschicht 7) und 8) ein Freiraum vorliegt, welcher beispielsweise mit einem isolierenden Gas, wie einem Edelgas, gefüllt sein kann.

Bevorzugt ist das Fenster derart angeordnet, dass die Schicht 1) an den Außenraum und die Schicht 8) an den Innenraum angrenzt. Eine umgekehrte Anordnung ist jedoch auch möglich und unter bestimmten Bedingungen bevorzugt.

Die oben angegebene Schichtenfolge kann durch weitere Schichten, wie beispielsweise zusätzliche Glasschichten oder Schutzschichten, beispielsweise gegen UV-Strahlung, gegen NIR-Strahlung, gegen VIS-Strahlung und/oder gegen physische Beschädigung, ergänzt sein.

Ein Fenster enthaltend die erfindungsgemäße Vorrichtung kann durch Nachrüsten eines bereits bestehenden Fensters gemäß dem Stand der Technik oder durch komplette Neuherstellung erhalten werden.

Bevorzugt ist die Vorrichtung dadurch gekennzeichnet, dass sie eine Flächenausdehnung von mindestens 0.05 $m^2$ aufweist, bevorzugt mindestens 0.1 $m^2$, besonders bevorzugt mindestens 0.5 $m^2$ und ganz besonders bevorzugt mindestens 0.8 $m^2$.

Die Vorrichtung stellt eine schaltbare Vorrichtung dar. Unter Schaltung der Vorrichtung wird dabei eine Änderung der Lichtdurchlässigkeit der Vorrichtung verstanden. Diese kann erfindungsgemäß zur Regulierung des Licht-Durchtritts durch die Vorrichtung genutzt werden. Die Vorrichtung ist bevorzugt elektrisch schaltbar.

Der Schaltvorgang erfolgt im Fall von elektrischer Schaltung durch eine Ausrichtung der Moleküle des flüssigkristallinen Mediums durch das Anlegen von Spannung. Die mindestens eine dichroitische Verbindung wird dadurch ebenfalls ausgerichtet, so dass ein Unterschied in der Lichtdurchlässigkeit der Vorrichtung bewirkt wird.

In einer bevorzugten Ausführungsform wird dabei die Vorrichtung von einem Zustand mit hoher Absorption, d. h. geringer Lichtdurchlässigkeit, der ohne Spannung vorliegt, durch Anlegen von Spannung in einen Zustand mit geringerer Absorption, d. h. höherer Lichtdurchlässigkeit, geschaltet.

Bevorzugt ist das flüssigkristalline Medium in beiden Zuständen nematisch. Der Zustand ohne angelegte Spannung ist bevorzugt dadurch gekennzeichnet, dass die Moleküle des flüssigkristallinen Mediums, und damit die dichroitischen Verbindungen, parallel zur Oberfläche der Vorrichtung ausgerichtet vorliegen (homogene Orientierung). Dies wird bevorzugt durch eine entsprechend gewählte Orientierungsschicht erreicht. Der Zustand unter Spannung ist bevorzugt dadurch gekennzeichnet, dass die Moleküle des flüssigkristallinen Mediums, und damit die dichroitischen Verbindungen, senkrecht zur Oberfläche der Vorrichtung vorliegen. Bevorzugt ist wenigstens ein überwiegender Teil der Moleküle des flüssigkristallinen Mediums der Schicht S im Zustand mit angelegter elektrischer Spannung senkrecht zur Ebene der Schicht S ausgerichtet.

In einer alternativen, ebenfalls möglichen und in bestimmten Fällen bevorzugten Ausführungsform wird die Vorrichtung von einem Zustand mit niedriger Absorption, d. h. hoher Lichtdurchlässigkeit, der ohne Spannung vorliegt, durch Anlegen von Spannung in einen Zustand mit höherer Absorption, d. h. geringerer Lichtdurchlässigkeit, geschaltet.

Bevorzugt ist das flüssigkristalline Medium in beiden Zuständen nematisch. Der Zustand ohne angelegte Spannung ist bevorzugt dadurch gekennzeichnet, dass die Moleküle des flüssigkristallinen Mediums, und damit die dichroitischen Verbindungen, senkrecht zur Oberfläche der Vorrichtung ausgerichtet vorliegen (homeotrope Orientierung). Dies wird bevorzugt durch eine entsprechend gewählte Orientierungsschicht erreicht. Der Zustand unter Spannung ist bevorzugt dadurch gekennzeichnet, dass die Moleküle des flüssigkristallinen Mediums, und damit die dichroitischen Verbindungen, parallel zur Oberfläche der Vorrichtung vorliegen. Bevorzugt ist wenigstens ein überwiegender Teil der Moleküle des flüssigkristallinen Mediums der Schicht S im Zustand mit angelegter elektrischer Spannung parallel zur Ebene der Schicht S ausgerichtet.

## Beschreibung der Abbildungen

Fig. 1 zeigt eine bevorzugte Schichtenabfolge einer erfindungsgemäßen Vorrichtung. Dabei sind Substratschicht (1), elektrisch leitfähige Schicht (2), Orientierungsschicht O1 (3a), schaltbare Schicht S (4), Orientierungsschicht O2 (3b), eine weitere elektrisch leitfähige Schicht (2) und eine weitere Substratschicht (1) hintereinander, direkt aneinander angrenzend angeordnet.

Fig. 2 zeigt einen senkrechten Blick auf die Orientierungsschichten O1 (3a) und O2 (3b). O2 liegt vom Betrachter her gesehen hinter O1. Der Pfeil (5) stellt die Reiberichtung der Orientierungsschicht O1 dar. Der Pfeil (6) stellt die Reiberichtung der Orientierungsschicht O2 dar. Das Symbol (7) verdeutlicht die Verdrillung der flüssigkristallinen Verbindungen der schaltbaren Schicht zwischen den Orientierungsschichten O1 und O2. Im vorliegenden Fall beschreiben die flüssigkristallinen Verbindungen eine linksgängige Helix mit einem Drehwinkel von 270° zwischen den Orientierungsschichten O1 und O2, da sie an der Grenzfläche zu O1 parallel zur Reiberichtung von O1 ausgerichtet sind, und an der Grenzfläche zu O2 parallel zur Reiberichtung von O2 ausgerichtet sind.

## Beschreibung der Bezugszeichen

| | |
|---|---|
| 1 | Substratschicht, bevorzugt aus Glas oder Polymer |
| 2 | elektrisch leitfähige Schicht |
| 3a | Orientierungsschicht O1 |
| 4 | Schaltbare Schicht S |
| 3b | Orientierungsschicht O2 |
| 5 | Reiberichtung in der Orientierungsschicht O1 |
| 6 | Reiberichtung in der Orientierungsschicht O2 |
| 7 | Verdrillungswinkel der flüssigkristallinen Verbindungen der schaltbaren Schicht (linksgängige Helix, wenn O2 hinter O1 liegt) |

## Ausführungsbeispiele

Im Folgenden werden Strukturen von flüssigkristallinen Verbindungen durch Abkürzungen wiedergegeben (Akronyme). Diese Abkürzungen werden in WO 2012/052100 explizit vorgestellt und erklärt (S. 63 - 89), so dass zur

Erläuterung der Abkürzungen in der vorliegenden Erfindung auf die genannte offengelegte Anmeldung verwiesen wird.

Alle physikalischen Eigenschaften werden nach "Merck Liquid Crystals, Physical Properties of Liquid Crystals", Status Nov. 1997, Merck KGaA, Deutschland bestimmt und gelten für eine Temperatur von 20°C. Der Wert von Δn wird bei 589 nm bestimmt.

A) Herstellung der Vorrichtungen

Es werden die erfindungsgemäßen Vorrichtungen
E1 bis E7 hergestellt, sowie die Vergleichsvorrichtungen V1 bis V6.

Die Vorrichtungen weisen die folgende Schichtabfolge auf:

a) Glasschicht aus poliertem 1.1 mm Soda-Lime-Glas von Coming
b) ITO-Schicht, 200 Angström
c) Orientierungsschicht O1 aus Polyimid AL-1054 von JSR, 300 Angström, gerieben, oder Polyimid Nissan SE-3140, 300 Angström, gerieben
d) Schaltbare Schicht mit flüssigkristallinem Medium (Zusammensetzung und Dicke unten bei den entsprechenden Beispielen angegeben)
e) Orientierungsschicht O2, wie c) aufgebaut; in unten angegebem Winkel zur Reiberichtung der Schicht c) gerieben
f) wie b)
g) wie a)

Die ITO-Schichten werden entsprechend kontaktiert, um elektrisch schaltbar zu sein.

Der schaltbaren Schicht wird der folgende Dotierstoff

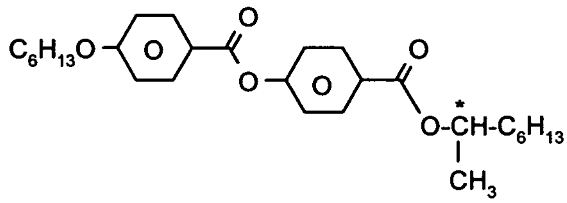

beigefügt, in je nach gewünschter Verdrillung unterschiedlicher Konzentration.

Zur benötigten Konzentration in Massenprozent des Dotierstoffs gelangt man mit folgender Berechnung:

$$c\,(\%) = 100 / (p * 11.94)$$

wobei p in μm einzugeben ist und der Wert für p wie folgt erhalten wird für die verschiedenen Dicken d der Schicht und die verschiedenen Verdrillungswinkel:

p = d / 0.10 für 90° Verdrillung
p = d / 0.40 für 180° Verdrillung
p = d / 0.48 für 220° Verdrillung
p = d / 0.53 für 240° Verdrillung
p = d / 0.57 für 270° Verdrillung

B) Verwendete Materialien

| Tabelle 1: verwendete flüssigkristalline Mischungen | | | | |
|---|---|---|---|---|
| | **H-1** | | **H-2** | |
| Δ n | 0.1342 | | 0.0730 | |
| Zusammensetzung | Verbindung | % | Verbindung | % |
| | CPG-3-F | 5 | CP-5-3 | 20 |
| | CPG-5-F | 5 | CC-3-5 | 10 |
| | CPU-3-F | 15 | CCU-2-F | 12 |
| | CPU-5-F | 15 | CCU-3-F | 10 |
| | CP-3-N | 16 | CCU-5-F | 8 |
| | CP-5-N | 16 | CCEG-3-F | 10 |
| | CCGU-3-F | 7 | CCEG-5-F | 10 |
| | CGPC-3-3 | 4 | CCG-3-OT | 10 |
| | CGPC-5-3 | 4 | CCG-5-OT | 10 |
| | CGPC-5-5 | 4 | | |
| | CCZPC-3-3 | 3 | | |
| | CCZPC-3-4 | 3 | | |
| | CCZPC-3-5 | 3 | | |

| Tabelle 2: verwendete Farbstoffe |
|---|
| 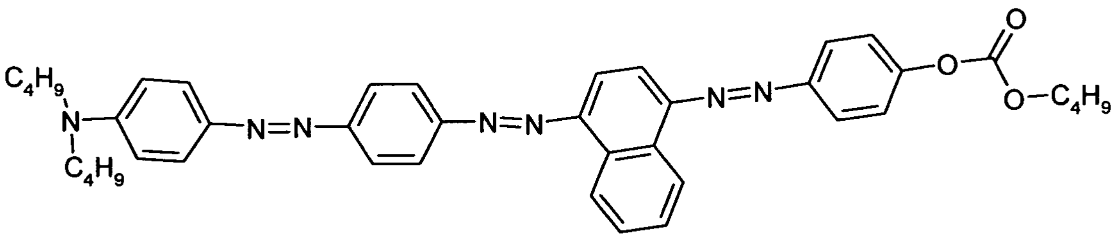 |
| D1 |
| 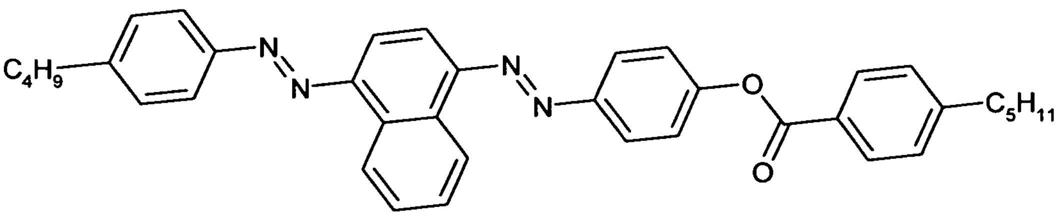 |
| D2 |
| 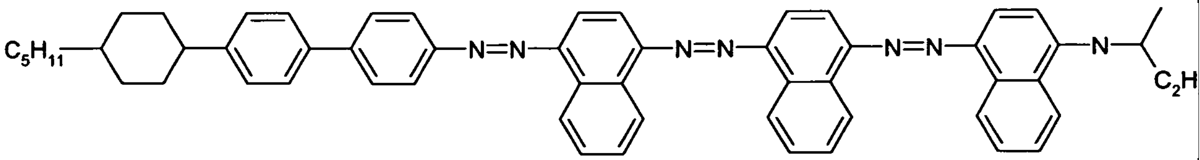 |
| D3 |

C) Erhaltene Ergebnisse

In allen Fällen werden die Vorrichtungen durch Anlegen einer Spannung zwischen den Elektroden vom Dunkel- in den Hellzustand geschaltet. Es wird in beiden Zuständen jeweils der Lichttransmissionsgrad gemäß der Norm EN410, Gleichung (1), bestimmt.

C-1) Beispiel 1

Die Helltransmission $\tau_{v\ hell}$ beträgt in beiden Fällen 70%.

| | Host | Farbstoffe in Verhältnis der Anteile | Farbstoff-Gesamtkonz. in Gew.-% * µm | Dicke d der Schaltschicht in µm | d * Δ n in µm | Verdrillung (Winkel zwischen den Reiberichtungen von O1 und O2 | Dunkel-Transmission $\tau_{v\ dunkel}$ |
|---|---|---|---|---|---|---|---|
| E1 | H1 | D1:D2:D3 1:0.8:2 | 19 | 5 | 0.67 | 240° | 20.6 % |
| V1 | s.o. | s.o | s.o. | 25 | 3.36 | 0° | 36.0 % |

Die erfindungsgemäße Vorrichtung E1 weist eine deutlich geringere Dunkeltransmission auf und damit, bei gleichbleibender Helltransmission, einen deutlich größeren Hub als die Vergleichsvorrichtung V1. Die Vergleichsvorrichtung ist durch eine Verdrillung von 0° und einen Wert von d* Δ n in µm von mehr als 2 gekennzeichnet.

C-2) Beispiel 2

Die Helltransmission $\tau_{v\ hell}$ beträgt in beiden Fällen 59.7%.

| | Host | Farbstoffe in Verhältnis der Anteile | Farbstoff-Gesamtkonz. in Gew.-% * µm | Dicke d der Schaltschicht in µm | d * Δ n in µm | Verdrillung (Winkel zwischen den Reiberichtungen von O1 und O2 | Dunkel-Transmission $\tau_{v\ dunkel}$ |
|---|---|---|---|---|---|---|---|
| E2 | H1 | D1:D2:D3 1:0.8:2 | 28 | 5 | 0.67 | 240° | 13.1 % |
| V2 | s.o. | s.o | s.o. | 25 | 3.36 | 0° | 30.0 % |

Die erfindungsgemäße Vorrichtung E2 weist eine deutlich geringere Dunkeltransmission auf und damit, bei gleichbleibender Helltransmission, einen deutlich größeren Hub als die Vergleichsvorrichtung V2. Die Vergleichsvorrichtung ist durch eine Verdrillung von 0° und einen Wert von d* Δ n in µm von mehr als 2 gekennzeichnet.

C-3) Beispiel 3

Die Helltransmission $\tau_{v\ hell}$ beträgt in beiden Fällen 79.3%.

| | Host | Farbstoffe in Verhältnis der Anteile | Farbstoff-Gesamtkonz. in Gew.-% * µm | Dicke d der Schaltschicht in µm | d * Δ n in µm | Verdrillung (Winkel zwischen den Reiberichtungen von O1 und O2 | Dunkel-Transmission $\tau_{v\ dunkel}$ |
|---|---|---|---|---|---|---|---|
| E3 | H1 | D1:D2:D3 1:0.8:2 | 12.6 | 5 | 0.67 | 240° | 31.2 % |
| V3 | s.o. | s.o | s.o. | 25 | 3.36 | 0° | 42.8 % |

Die erfindungsgemäße Vorrichtung E3 weist eine deutlich geringere Dunkeltransmission auf und damit, bei gleichbleibender Helltransmission, einen deutlich größeren Hub als die Vergleichsvorrichtung V3. Die Vergleichsvorrichtung ist durch eine Verdrillung von 0° und einen Wert von d* Δ n in µm von mehr als 2 gekennzeichnet.

C-4) Beispiel 4

Die Helltransmission $\tau_{v\ hell}$ beträgt in beiden Fällen 69.9 %.

| | Host | Farbstoffe | Farbstoff-Gesamtkonz. in Gew.-% * µm | Dicke d der Schaltschicht in µm | d * Δ n in µm | Verdrillung (Winkel zwischen den Reiberichtungen von O1 und O2 | Dunkel-Transmission $\tau_{v\ dunkel}$ |
|---|---|---|---|---|---|---|---|
| E4 | H1 | D1 | 12.5 | 5 | 0.67 | 240° | 24.8 % |
| V4 | s.o. | s.o | s.o. | 25 | 3.36 | 0° | 38.0 % |

Die erfindungsgemäße Vorrichtung E4 weist eine deutlich geringere Dunkeltransmission auf und damit, bei gleicher Helltransmission, einen deutlich größeren Hub als die Vergleichsvorrichtung V4. Die Vergleichsvorrichtung ist durch eine Verdrillung von 0° und einen Wert von d* Δ n in µm von mehr als 2 gekennzeichnet.

C-5) Beispiel 5

Die Helltransmission $\tau_{v\ hell}$ beträgt in allen Fällen 71.0 %.

| | Host | Farbstoffe | Farbstoff-Gesamtkonz. in Gew.-% * µm | Dicke d der Schaltschicht in µm | d * Δ n in µm | Verdrillung (Winkel zwischen den Reiberichtungen von O1 und O2 | Dunkel-Transmission $\tau_{v\ dunkel}$ |
|---|---|---|---|---|---|---|---|
| V5-1 | H1 | D1 | 12.0 | 24.19 | 3.25 | 0° | 38.6 % |
| V5-2 | s.o. | s.o. | s.o. | 5.94 | 0.81 | 0° | 38.9 % |
| V5-3 | s.o. | s.o. | s.o. | 3.00 | 0.40 | 0° | 38.7 % |
| V5-4 | s.o. | s.o. | s.o. | 24.19 | 3.25 | 240° | 37.2 % |
| E5-1 | s.o. | s.o. | s.o. | 5.94 | 0.81 | 240° | 27.8 % |
| E5-2 | s.o. | s.o | s.o. | 3.00 | 0.40 | 240° | 21.7 % |

Die erfindungsgemäßen Vorrichtungen E5-1 und E5-2 weisen eine deutlich geringere Dunkeltransmission auf und damit, bei gleicher Helltransmission, einen deutlich größeren Hub als die Vergleichsvorrichtungen V5-1 bis V5-4. Die Vergleichsvorrichtungen sind durch eine Verdrillung von 0° und/oder einen Wert von d* Δ n in µm von mehr als 2 gekennzeichnet.

C-6) Beispiel 6

Die Helltransmission $\tau_{v\ hell}$ beträgt in allen Fällen 71.0 %.

| | Host | Farbstoffe | Farbstoff-Gesamtkonz. in Gew.-% * µm | Dicke d der Schaltschicht in µm | d * Δ n in µm | Verdrillung (Winkel zwischen den Reiberichtungen von O1 und O2 | Dunkel-Transmission $\tau_{v\ dunkel}$ |
|---|---|---|---|---|---|---|---|
| V6-1 | H1 | D1 | 12.0 | 24.19 | 3.25 | 90° | 38.6 % |
| V6-2 | s.o. | s.o. | s.o. | 24.19 | 3.25 | 0° | 38.6 % |
| V6-3 | s.o. | s.o. | s.o. | 5.94 | 0.81 | 0° | 38.9 % |
| V6-4 | s.o. | s.o. | s.o. | 3.00 | 0.40 | 0° | 38.7 % |
| E6-1 | s.o. | s.o. | s.o. | 5.94 | 0.81 | 90° | 38.2 % |
| E6-2 | s.o. | s.o. | s.o. | 5.94 | 0.81 | 240° | 27.8 % |

(fortgesetzt)

| | Host | Farbstoffe | Farbstoff-Gesamtkonz. in Gew.-% * µm | Dicke d der Schaltschicht in µm | d * Δ n in µm | Verdrillung (Winkel zwischen den Reiberichtungen von O1 und O2 | Dunkel-Transmission $\tau_{v\ dunkel}$ |
|---|---|---|---|---|---|---|---|
| E6-3 | s.o. | s.o. | s.o. | 5.94 | 0.81 | 270° | 26.4 % |
| E6-4 | s.o. | s.o. | s.o. | 3.00 | 0.40 | 90° | 29.4 % |
| E6-5 | s.o. | s.o | s.o. | 3.00 | 0.40 | 270° | 20.7 % |

Die erfindungsgemäßen Vorrichtungen E6-1 bis E6-5 weisen eine deutlich geringere Dunkeltransmission auf und damit, bei gleicher Helltransmission, einen deutlich größeren Hub als die Vergleichsvorrichtungen V6-1 bis V6-4. Die Vergleichsvorrichtung V6-1 ist durch einen Wert von d* Δ n von mehr als 2 µm gekennzeichnet. Die Vergleichsvorrichtungen V6-2 bis V6-4 sind dadurch gekennzeichnet, dass sie keine Verdrillung aufweisen. Bei den erfindungsgemäßen Vorrichtungen ist der Wert von d* Δ n und die Verdrillung variiert. Dabei zeigt sich, dass insbesondere eine Kombination von geringem Wert für d* Δ n und einer hohen Verdrillung zu einem sehr hohen Hub führt.

C-7) Beispiel 7

Die Helltransmission $T_{hell}$ bei 545 nm beträgt in allen Fällen 61.0 %.

| | Host | Farbstoffe | Farbstoff-Gesamtkonz. in Gew.-% * µm | Dicke d der Schaltschicht in µm | d * Δ n in µm | Verdrillung (Winkel zwischen den Reiberichtungen von O1 und O2 | Dunkel-Transmission $T_{dunkel}$ bei 545 nm |
|---|---|---|---|---|---|---|---|
| E7-1 | H1 | D1 | 12.0 | 5.94 | 0.81 | 240° | 20 % |
| E7-2 | H2 | s.o. | s.o. | 5.94 | 0.44 | 240° | 12 % |
| E7-3 | H1 | s.o. | s.o. | 5.94 | 0.81 | 270° | 19 % |
| E7-4 | H2 | s.o. | s.o. | 5.94 | 0.44 | 270° | 12 % |
| E7-5 | H1 | s.o. | s.o. | 3.00 | 0.40 | 270° | 12 % |
| E7-6 | H2 | s.o | s.o. | 3.00 | 0.22 | 270° | 10 % |

Die erfindungsgemäßen Vorrichtungen E7-1 bis E7-6 weisen unterschiedliche Hostmischungen und unterschiedliche Werte für d * Δ n auf. Es zeigt sich, dass tatsächlich der Wert d * Δ n und nicht unmittelbar die Dicke der schaltbaren Schicht die erhaltenen Werte für die Dunkeltransmission beeinflusst.

**Patentansprüche**

1. Vorrichtung zur Regulierung des Lichteintritts in einen Raum, umfassend eine schaltbare Schicht S enthaltend ein flüssigkristallines Medium, das mindestens eine dichroitische Verbindung und eine oder mehrere chirale Verbindungen enthält,
wobei für die Dicke d der Schicht S und die optische Anisotropie Δn des flüssigkristallinen Mediums der Schicht S gilt:

$$d < 0{,}9\ \mu m / \Delta n$$

und

$$d > 0{,}2\ \mu m / \Delta n,$$

und wobei die Moleküle des flüssigkristallinen Mediums der Schicht S im Schaltzustand der Vorrichtung ohne angelegte elektrische Spannung oder im Schaltzustand der Vorrichtung mit angelegter elektrischer Spannung in einem verdrillt nematischen Zustand vorliegen,
und wobei die Vorrichtung keinen Polarisator umfasst.

2. Vorrichtung nach Anspruch 1, **dadurch gekennzeichnet, dass** genau eine Orientierungsschicht, bezeichnet als O1, an die eine Seite der schaltbaren Schicht S angrenzt, und genau eine andere Orientierungsschicht, bezeichnet als O2, an die gegenüberliegende Seite der schaltbaren Schicht S angrenzt.

3. Vorrichtung nach Anspruch 2, **dadurch gekennzeichnet, dass** die Orientierungsschichten O1 und O2 derart gestaltet sind, dass sie im angrenzenden Bereich der Schicht S jeweils unterschiedlich ausgerichtete Orientierungsachsen der Moleküle des flüssigkristallinen Mediums bewirken.

4. Vorrichtung nach Anspruch 2 oder 3, **dadurch gekennzeichnet, dass** die Reiberichtungen der Orientierungsschichten O1 und O2 einen Winkel von 30 bis 270° einschließen.

5. Vorrichtung nach einem oder mehreren der Ansprüche 2 bis 4,
**dadurch gekennzeichnet, dass** die Orientierungsschichten O1 und O2 eine homogene Anordnung der Moleküle des flüssigkristallinen Mediums der Schicht S angrenzend an die Orientierungsschicht bewirken.

6. Vorrichtung nach einem oder mehreren der Ansprüche 2 bis 5,
**dadurch gekennzeichnet, dass** die Orientierungsschichten O1 und O2 an ihrer Oberfläche angrenzend an die Schicht S geriebenes Polyimid aufweisen.

7. Vorrichtung nach einem oder mehreren der Ansprüche 2 bis 6,
**dadurch gekennzeichnet, dass** die Orientierungsachsen der Moleküle des flüssigkristallinen Mediums der Schicht S bei homogener Ausrichtung im Zustand ohne angelegte Spannung einen Winkel von 1° bis 10° mit der Ebene der Orientierungsschicht O1 bzw. O2 einschließen.

8. Vorrichtung nach einem oder mehreren der Ansprüche 2 bis 6,
**dadurch gekennzeichnet, dass** die Orientierungsachsen der Moleküle des flüssigkristallinen Mediums der Schicht S bei homeotroper Ausrichtung im Zustand ohne angelegte Spannung einen Winkel von 89° bis 80° mit der Ebene der Orientierungsschicht O1 bzw. O2 einschließen.

9. Vorrichtung nach einem oder mehreren der Ansprüche 1 bis 8,
**dadurch gekennzeichnet, dass** die Schicht S eine Dicke zwischen 2 und 12 μm hat.

10. Vorrichtung nach einem oder mehreren der Ansprüche 1 bis 9,
**dadurch gekennzeichnet, dass** die Schicht S einen Lichttransmissionsgrad des Hellzustands $\tau_{v\,hell}$, berechnet nach der Europäischen Norm EN410, Gleichung (1), von mindestens 30% aufweist.

11. Vorrichtung nach einem oder mehreren der Ansprüche 1 bis 10,
**dadurch gekennzeichnet, dass** die Schicht S mindestens zwei verschiedene dichroitische Verbindungen aufweist.

12. Vorrichtung nach einem oder mehreren der Ansprüche 1 bis 11,
**dadurch gekennzeichnet, dass** sie in allen ihren Schaltzuständen in der Durchsicht farblos ist.

13. Vorrichtung nach einem oder mehreren der Ansprüche 1 bis 12,
**dadurch gekennzeichnet, dass** mindestens eine dichroitische Verbindung gewählt ist aus Azoverbindungen, Anthrachinonen, Methinverbindungen, Azomethinverbindungen, Merocyaninverbindungen, Naphthochinonen, Tetrazinen, Perylenen, Terrylenen, Quaterrylenen, höheren Rylenen, Squarainen, Benzothiadiazolen, Diketopyrrolopyrrolen und Pyrromethenen.

14. Vorrichtung nach einem oder mehreren der Ansprüche 1 bis 13,
**dadurch gekennzeichnet, dass** die Moleküle des flüssigkristallinen Mediums im Schaltzustand der Vorrichtung ohne angelegte Spannung in einem verdrillt nematischen Zustand und homogen ausgerichtet vorliegen und im Schaltzustand der Vorrichtung mit angelegter Spannung unverdrillt nematisch und homeotrop ausgerichtet vorliegen.

**15.** Vorrichtung nach einem oder mehreren der Ansprüche 1 bis 14,
**dadurch gekennzeichnet, dass** die Verdrillung der Orientierungsachsen der Moleküle des flüssigkristallinen Mediums der Schicht S im verdrillt nematischen Zustand über die gesamte Schichtdicke gesehen zwischen 100° und 260° beträgt.

**16.** Vorrichtung nach einem oder mehreren der Ansprüche 1 bis 14,
**dadurch gekennzeichnet, dass** die die Verdrillung der Orientierungsachsen der Moleküle des flüssigkristallinen Mediums der Schicht S im verdrillt nematischen Zustand über die gesamte Schichtdicke betrachtet zwischen 320° und drei vollständigen Umdrehungen beträgt.

**17.** Vorrichtung nach einem oder mehreren der Ansprüche 1 bis 16,
**dadurch gekennzeichnet, dass** die dielektrische Anisotropie $\Delta\varepsilon$ des flüssigkristallinen Mediums größer als 3 oder kleiner als -3 ist.

**18.** Vorrichtung nach einem oder mehreren der Ansprüche 1 bis 17,
**dadurch gekennzeichnet, dass** das flüssigkristalline Medium die eine oder mehreren chiralen Verbindungen in einer Gesamtkonzentration von 0,01 bis 3 Gew.-% enthält.

**19.** Vorrichtung nach einem oder mehreren der Ansprüche 1 bis 18,
**dadurch gekennzeichnet, dass** sie eine Vorrichtung zur Umwandlung von Lichtenergie in elektrische Energie umfasst.

**20.** Vorrichtung nach einem oder mehreren der Ansprüche 1 bis 19,
**dadurch gekennzeichnet, dass** sie eine oder mehrere Glasschichten umfasst, welche in entspiegelter Ausführung vorliegen.

**21.** Vorrichtung nach einem oder mehreren der Ansprüche 1 bis 20,
**dadurch gekennzeichnet, dass** sie eine Flächenausdehnung von mindestens 0,05 $m^2$ aufweist.

**22.** Vorrichtung nach einem oder mehreren der Ansprüche 1 bis 21,
**dadurch gekennzeichnet, dass** sie zur homogenen Regulierung des Lichteintritts durch eine Fläche in einen Raum geeignet ist.

**23.** Fenster, enthaltend eine Vorrichtung nach einem oder mehreren der Ansprüche 1 bis 22.

**24.** Verwendung einer Vorrichtung nach einem oder mehreren der Ansprüche 1 bis 21 zur homogenen Regulierung des Lichtdurchtritts durch eine lichtdurchlässige Fläche in einen Raum.

## Claims

**1.** Device for regulating the entry of light into a room, comprising a switchable layer S comprising a liquid-crystalline medium which comprises at least one dichroic compound and one or more chiral compounds,
where the following applies to the thickness d of the layer S and the optical anisotropy $\Delta n$ of the liquid-crystalline medium of the layer S:

$$d < 0.9\ \mu m / \Delta n$$

and

$$d > 0.2\ \mu m / \Delta n,$$

and where the molecules of the liquid-crystalline medium of the layer S are in a twisted nematic state in the switching state of the device without an applied electrical voltage or in the switching state of the device with an applied electrical voltage,

and where the device does not include a polariser.

2. Device according to Claim 1, **characterised in that** precisely one orientation layer, called O1, is adjacent to one side of the switchable layer S, and precisely one other orientation layer, called O2, is adjacent to the opposite side of the switchable layer S.

3. Device according to Claim 2, **characterised in that** the orientation layers O1 and O2 are formed in such a way that they each cause differently aligned orientation axes of the molecules of the liquid-crystalline medium in the adjacent region of the layer S.

4. Device according to Claim 2 or 3, **characterised in that** the rubbing directions of the orientation layers O1 and O2 include an angle of 30 to 270°.

5. Device according to one or more of Claims 2 to 4, **characterised in that** the orientation layers O1 and O2 cause a homogeneous arrangement of the molecules of the liquid-crystalline medium of the layer S adjacent to the orientation layer.

6. Device according to one or more of Claims 2 to 5, **characterised in that** the orientation layers O1 and O2 have rubbed polyimide on their surface adjacent to the layer S.

7. Device according to one or more of Claims 2 to 6, **characterised in that**, in the case of homogeneous alignment in the state without an applied voltage, the orientation axes of the molecules of the liquid-crystalline medium of the layer S include an angle of 1° to 10° with the plane of the orientation layer O1 or O2.

8. Device according to one or more of Claims 2 to 6, **characterised in that**, in the case of homeotropic alignment in the state without an applied voltage, the orientation axes of the molecules of the liquid-crystalline medium of the layer S include an angle of 89° to 80° with the plane of the orientation layer O1 or O2.

9. Device according to one or more of Claims 1 to 8, **characterised in that** the layer S has a thickness between 2 and 12 $\mu$m.

10. Device according to one or more of Claims 1 to 9, **characterised in that** the layer S has a light transmittance of the bright state $\tau_{v\ bright}$, calculated in accordance with European Standard EN410, equation (1), of at least 30%.

11. Device according to one or more of Claims 1 to 10, **characterised in that** the layer S comprises at least two different dichroic compounds.

12. Device according to one or more of Claims 1 to 11, **characterised in that** it is colourless when looked through in all its switching states.

13. Device according to one or more of Claims 1 to 12, **characterised in that** at least one dichroic compound is selected from azo compounds, anthraquinones, methine compounds, azomethine compounds, merocyanine compounds, naphthoquinones, tetrazines, perylenes, terrylenes, quaterrylenes, higher rylenes, squaraines, benzothiadiazoles, diketopyrrolopyrroles and pyrromethenes.

14. Device according to one or more of Claims 1 to 13, **characterised in that** the molecules of the liquid-crystalline medium are in a twisted nematic state and in a homogeneous alignment in the switching state of the device without an applied voltage and are in an untwisted nematic state and in a homeotropic alignment in the switching state of the device with an applied voltage.

15. Device according to one or more of Claims 1 to 14, **characterised in that** the twist of the orientation axes of the molecules of the liquid-crystalline medium of the layer S in the twisted nematic state is between 100° and 260°, regarded over the entire layer thickness.

16. Device according to one or more of Claims 1 to 14, **characterised in that** the twist of the orientation axes of the molecules of the liquid-crystalline medium of the layer S in the twisted nematic state is between 320° and three complete rotations, regarded over the entire layer thickness.

17. Device according to one or more of Claims 1 to 16, **characterised in that** the dielectric anisotropy $\Delta\varepsilon$ of the liquid-crystalline medium is greater than 3 or less than -3.

18. Device according to one or more of Claims 1 to 17, **characterised in that** the liquid-crystalline medium comprises the one or more chiral compounds in a total concentration of 0.01 to 3% by weight.

19. Device according to one or more of Claims 1 to 18, **characterised in that** it comprises a device for the conversion of light energy into electrical energy.

20. Device according to one or more of Claims 1 to 19, **characterised in that** it comprises one or more glass layers which have an antireflection design.

21. Device according to one or more of Claims 1 to 20, **characterised in that** it has an area extent of at least 0.05 $m^2$.

22. Device according to one or more of Claims 1 to 21, **characterised in that** it is suitable for the homogeneous regulation of the entry of light through an area into a room.

23. Window containing a device according to one or more of Claims 1 to 22.

24. Use of a device according to one or more of Claims 1 to 21 for the homogeneous regulation of the passage of light through a light-transmitting area into a room.

**Revendications**

1. Dispositif pour réguler l'entrée de la lumière à l'intérieur d'une pièce, comprenant une couche commutable S qui comprend un milieu cristallin liquide, lequel comprend au moins un composé dichroïque et un composé chiral ou plusieurs composés chiraux ;
dans lequel ce qui suit s'applique à l'épaisseur d de la couche S et à l'anisotropie optique $\Delta n$ du milieu cristallin liquide de la couche S :

$$d < 0{,}9\ \mu m / \Delta n$$

et

$$d > 0{,}2\ \mu m / \Delta n\ ;$$

et dans lequel les molécules du milieu cristallin liquide de la couche S sont dans un état nématique vrillé dans l'état de commutation du dispositif sans qu'une tension électrique ne soit appliquée ou dans l'état de commutation du dispositif tandis qu'une tension électrique est appliquée ; et dans lequel le dispositif n'inclut pas de polariseur.

2. Dispositif selon la revendication 1, **caractérisé en ce que** précisément une couche d'orientation, qui est appelée O1, est adjacente à un côté de la couche commutable S, et précisément une autre couche d'orientation, qui est appelée O2, est adjacente au côté opposé de la couche commutable S.

3. Dispositif selon la revendication 2, **caractérisé en ce que** les couches d'orientation O1 et O2 sont conçues de telle sorte qu'elles engendrent chacune des axes d'orientation alignés différemment des molécules du milieu cristallin liquide dans la région adjacente de la couche S.

4. Dispositif selon la revendication 2 ou 3, **caractérisé en ce que** les directions de frottement des couches d'orientation O1 et O2 incluent un angle de 30° à 270°.

5. Dispositif selon une ou plusieurs des revendications 2 à 4, **caractérisé en ce que** les couches d'orientation O1 et O2 génèrent un agencement homogène des molécules du milieu cristallin liquide de la couche S en une position adjacente à la couche d'orientation.

**6.** Dispositif selon une ou plusieurs des revendications 2 à 5, **caractérisé en ce que** les couches d'orientation O1 et O2 comportent du polyimide frotté sur leurs surfaces qui sont adjacentes à la couche S.

**7.** Dispositif selon une ou plusieurs des revendications 2 à 6, **caractérisé en ce que**, dans le cas d'un alignement homogène dans l'état sans qu'une tension ne soit appliquée, les axes d'orientation des molécules du milieu cristallin liquide de la couche S incluent un angle de 1° à 10° par rapport au plan de la couche d'orientation O1 ou O2.

**8.** Dispositif selon une ou plusieurs des revendications 2 à 6, **caractérisé en ce que**, dans le cas d'un alignement homéotrope dans l'état sans qu'aucune tension ne soit appliquée, les axes d'orientation des molécules du milieu cristallin liquide de la couche S incluent un angle de 89° à 80° par rapport au plan de la couche d'orientation O1 ou O2.

**9.** Dispositif selon une ou plusieurs des revendications 1 à 8, **caractérisé en ce que** la couche S présente une épaisseur entre 2 $\mu$m et 12 $\mu$m.

**10.** Dispositif selon une ou plusieurs des revendications 1 à 9, **caractérisé en ce que** la couche S présente une transmittance de la lumière de l'état lumineux $\tau_{v\ bright}$, laquelle est calculée conformément au standard européen EN410, équation (1), d'au moins 30 %.

**11.** Dispositif selon une ou plusieurs des revendications 1 à 10, **caractérisé en ce que** la couche S comprend au moins deux composés dichroïques différents.

**12.** Dispositif selon une ou plusieurs des revendications 1 à 11, **caractérisé en ce qu'**il est incolore lorsqu'il est vu dans tous ses états de commutation.

**13.** Dispositif selon une ou plusieurs des revendications 1 à 12, **caractérisé en ce qu'**au moins un composé dichroïque est sélectionné parmi les composés azo, les anthraquinones, les composés de méthine, les composés d'azométhine, les composés de mérocyanine, les naphtoquinones, les tétrazines, les pérylènes, les terrylènes, les quaterrylènes, les rylènes d'ordre élevé, les squaraines, les benzothiadiazoles, les dicétopyrrolopyrroles et les pyrrométhènes.

**14.** Dispositif selon une ou plusieurs des revendications 1 à 13, **caractérisé en ce que** les molécules du milieu cristallin liquide sont dans un état nématique vrillé et selon un alignement homogène dans l'état de commutation du dispositif sans qu'une tension ne soit appliquée et sont dans un état nématique non vrillé et selon un alignement homéotrope dans l'état de commutation du dispositif tandis qu'une tension est appliquée.

**15.** Dispositif selon une ou plusieurs des revendications 1 à 14, **caractérisé en ce que** le vrillage des axes d'orientation des molécules du milieu cristallin liquide de la couche S dans l'état nématique vrillé est entre 100° et 260°, tel que vu sur la totalité de l'épaisseur de la couche.

**16.** Dispositif selon une ou plusieurs des revendications 1 à 14, **caractérisé en ce que** le vrillage des axes d'orientation des molécules du milieu cristallin liquide de la couche S dans l'état nématique vrillé est entre 320° et trois rotations complètes, tel que vu sur la totalité de l'épaisseur de la couche

**17.** Dispositif selon une ou plusieurs des revendications 1 à 16, **caractérisé en ce que** l'anisotropie diélectrique $\Delta\varepsilon$ du milieu cristallin liquide est supérieure à 3 ou inférieure à -3.

**18.** Dispositif selon une ou plusieurs des revendications 1 à 17, **caractérisé en ce que** le milieu cristallin liquide comprend les un ou plusieurs composés chiraux selon une concentration totale de 0,01 % à 3 % en poids.

**19.** Dispositif selon une ou plusieurs des revendications 1 à 18, **caractérisé en ce qu'**il comprend un dispositif pour la conversion de l'énergie lumineuse en énergie électrique.

**20.** Dispositif selon une ou plusieurs des revendications 1 à 19, **caractérisé en ce qu'**il comprend une ou plusieurs couche(s) de verre qui présente(nt) une conception antireflet.

**21.** Dispositif selon une ou plusieurs des revendications 1 à 20, **caractérisé en ce qu'**il présente une étendue surfacique d'au moins 0,05 $m^2$.

**22.** Dispositif selon une ou plusieurs des revendications 1 à 21, **caractérisé en ce qu'**il convient pour la régulation

homogène de l'entrée de la lumière au travers d'une aire à l'intérieur d'une pièce.

**23.** Fenêtre contenant un dispositif selon une ou plusieurs des revendications 1 à 22.

**24.** Utilisation d'un dispositif selon une ou plusieurs des revendications 1 à 21 pour la régulation homogène du passage de la lumière au travers d'une aire de transmission de lumière à l'intérieur d'une pièce.

Fig. 1

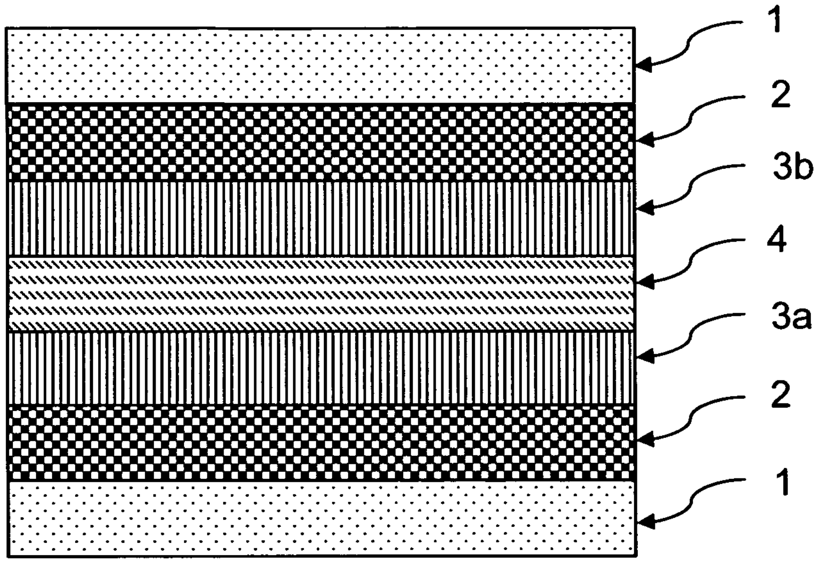


Fig. 2

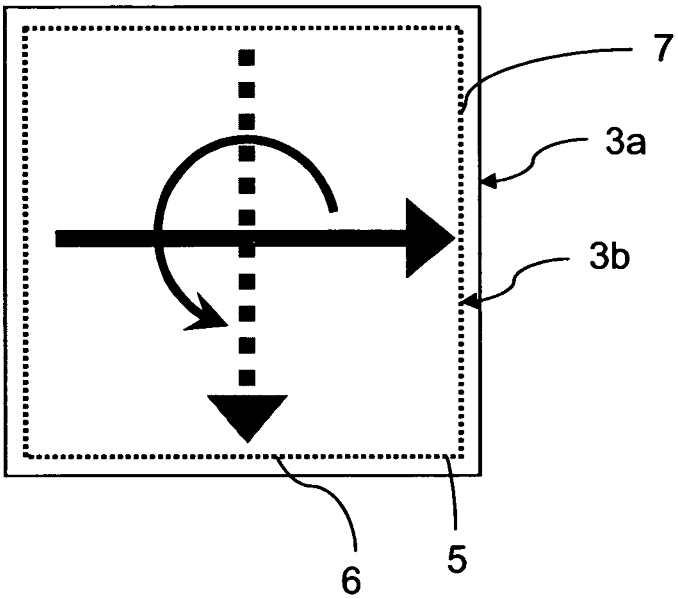

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2009141295 A
- US 20100259698 A
- WO 2013060406 A1
- WO 2014135240 A2
- EP 34832 A
- EP 44893 A
- EP 48583 A
- EP 54217 A
- EP 56492 A
- EP 59036 A
- GB 2065158 A
- GB 2065695 A
- GB 2081736 A
- GB 2082196 A
- GB 2094822 A
- GB 2094825 A
- JP OS55123673 A
- DE 3017877
- DE 3040102
- DE 3115147
- DE 3115762
- DE 3150803
- DE 3201120
- DE 3126108
- DE 3202761
- EP 43904 A
- DE 3123519
- WO 822054 A
- GB 2079770 A
- JP OS5657850 A
- JP OS56104984 B
- US 4308161 A
- US 4308162 A
- US 4340973 A
- EP 60895 A, Perylene
- EP 68427 A
- WO 821191 A
- JP 2008268762 A
- JP 2003104976 A
- WO 2004002970 A
- EP 13002711 A
- EP 2166040 A
- US 20110042651 A
- EP 47027 A
- DE 3110960
- EP 698649 A
- EP 13005918 A
- WO 2012052100 A


### In der Beschreibung aufgeführte Nicht-Patentliteratur


- Merck Liquid Crystals, Physical Properties of Liquid Crystals. Merck KGaA, November 1997
- **MANFRED RICHTER.** Einführung in die Farbmetrik. Verlag Walter de Gruyter & Co, 1981, vol. 2
- **B. BAHADUR.** Liquid Crystals - Applications and Uses. World Scientific Publishing, 1992, vol. 3
- **T. UCHIDA ; C. SHISHIDO ; H. SEKI ; M. WADA.** *Mol. Cryst. Liq. Cryst.,* 1977, vol. 39, 39-52
- **H. SEKI ; C. SHISHIDO ; S. YASUI ; T. UCHIDA.** *Jpn. J. Appl. Phys.,* 1982, vol. 21, 191-192
- **X. ZHANG et al.** *J. Mater. Chem.,* 2004, vol. 14, 1901-1904
- **X. ZHANG et al.** *J. Mater. Chem.,* 2006, vol. 16, 736-740
- **X. LI ; 2008 et al.** *Org. Lett.,* vol. 10 (17), 3785-3787